# EUROPEAN PATENT APPLICATION

(11) **EP 4 815 558 A1**
(43) Date of publication of application: **30.09.2026**
(21) Application number: 24893087.7
(22) Date of filing: 16.10.2024
(51) Int. Cl.: H04W 36/00

(54) **MOBILITY FAILURE PROCESSING METHOD AND APPARATUS, AND TERMINAL AND NETWORK DEVICE**

(30) Priority: 23.11.2023 CN 202311576008
(71) Applicant: Datang Mobile Communications Equipment Co., Ltd., Beijing 100085 (CN)
(72) Inventor: YAN, Xue, Beijing 100085 (CN); YAN, Nan, Beijing 100085 (CN)
(74) Representative: Maiwald GmbH
(86) International application number: PCT/CN2024/125224
(87) International publication number: WO 2025/107928

(57) **Abstract**

This application provides a mobility failure handling method, an apparatus, a terminal, and a network device. The method includes: recording, by a terminal, first information in a case that mobility LTM configuration information triggered by Layer 1 and/or Layer 2 is configured and a failure occurs, wherein the first information is LTM-related failure information; and transmitting, by the terminal, the first information to a network device.

## Description

### CROSS-REFERENCE TO RELATED APPLICATIONS

This application claims a priority to Chinese Patent Application No. 202311576008.8 filed in China on November 23, 2023, entitled "Mobility Failure Handling Method, Apparatus, Terminal, and Network Device", the entire contents of which are incorporated herein by reference.

### TECHNICAL FIELD

The present disclosure relates to the field of communication technology, and in particular to a mobility failure handling method, apparatus, terminal, and network device.

### BACKGROUND

In related technologies, in a Layer 1 and/or Layer 2 triggered mobility (L1/L2 triggered mobility, LTM) mechanism, a network device preconfigures a plurality of candidate cell configurations and L1 measurement configurations thereof for user equipment (User Equipment, UE), the UE performs L1 measurement based on the L1 measurement configurations configured by the network device and reports an L1 measurement result, and the network device transmits an LTM cell switch command to the UE based on the L1 measurement result reported by the UE. For a case in which LTM mobility failure may occur in the UE, further optimization is still needed.

### SUMMARY

The present disclosure is to provide a mobility failure handling method, apparatus, terminal, and network device, so as to optimize a problem that a terminal has an LTM mobility failure.

An embodiment of the present disclosure provides a mobility failure handling method, which is applied to a terminal. The method includes:
in a case that a terminal is configured with Layer 1 and/or Layer 2 triggered mobility LTM configuration information, if a failure occurs, recording first information, where the first information is failure information related to LTM; and
transmitting, by the terminal, the first information to a network device.

In some embodiments, the in a case that the terminal is configured with the Layer 1 and/or Layer 2 triggered mobility LTM configuration information, if the failure occurs, recording the first information includes one or more of the following:
in a case that the terminal is configured with the Layer 1 and/or Layer 2 triggered mobility LTM configuration information, if a single failure occurs, recording the first information; and
in a case that the terminal is configured with the Layer 1 and/or Layer 2 triggered mobility LTM configuration information, if consecutive failures occur, recording the first information, where the consecutive failures include at least two failures.

In some embodiments, the single failure includes one of the following:
performing LTM failure;
Radio Link Failure (RLF) occurring in a source cell; and
performing traditional cell switch failure.

In some embodiments, the consecutive failures include one of the following:
performing LTM failure, and failure in recovery through LTM;
RLF occurring in a source cell, and failure in recovery through LTM;
performing traditional cell switch failure, and failure in recovery through LTM;
performing LTM failure, successful recovery through LTM, and RLF occurring within first time after accessing a target cell; and
RLF occurring in a source cell, successful recovery through LTM, and RLF occurring within second time after accessing a target cell.
performing traditional cell switch failure, successful recovery through LTM, and RLF occurring within third time after accessing a target cell.

In some embodiments, the first information includes one or more of the following:
related information of performing LTM failure;
related information of LTM recovery failure;
time-related information of occurrence of failure; and
indication information of whether subsequent LTM is supported.

In some embodiments, the related information of performing LTM failure includes one or more of the following:
first indication information, configured to indicate an LTM execution type;
information of LTM cell switch;
identification information of an LTM candidate cell;
L1 measurement result information of the LTM candidate cell;
L1 measurement configuration information of the LTM candidate cell; and
Transmission Configuration Indicator (TCI) state activated in advance.
second indication information, configured to indicate that an execution manner of LTM is a Random Access Channel (RACH) or non-RACH;
a Timing Advance (TA) value of a target cell determined by the terminal;
Configured Grant (CG) configuration information of the target cell;
a value of an LTM timer;
time between a moment at which the terminal receives LTM configuration information and a moment at which the terminal performs LTM failure;
time between a moment at which the terminal performs LTM failure and a moment at which the first information is transmitted to the network device;
reference configuration information;
configuration information of the LTM candidate cell; and
configuration information executed by the candidate cell.

In some embodiments, the related information of LTM recovery failure includes one or more of the following:
identification information of an LTM recovery cell;
third indication information, configured to indicate whether the terminal obtains a TA value of the LTM recovery cell;
a TA value of the LTM recovery cell determined by the terminal;
fourth indication information, configured to indicate that an LTM recovery process is a RACH process or a non-RACH process;
fifth indication information, configured to indicate whether the terminal is downlink-synchronized with the LTM recovery cell;
CG configuration information of the LTM recovery cell; and
reference configuration information.
configuration information of the LTM recovery cell; and
identification information of a cell in which Radio Link Failure occurs.

In some embodiments, the time-related information of occurrence of failure includes one or more of the following:
time between a moment at which the terminal receives LTM configuration information and a moment at which RLF occurs;
time between a moment at which the terminal receives LTM configuration information and a moment at which traditional cell switch failure occurs;
time between a moment at which the terminal receives LTM configuration information and a moment at which the first information is transmitted to the network device;
time between a moment at which RLF occurs in the terminal and a moment at which the first information is transmitted to the network device; and
time between a moment at which traditional cell switch failure occurs in the terminal and a moment at which the first information is transmitted to the network device.

In some embodiments, the information of LTM cell switch includes one or more of the following:
TCI state identification information;
target configuration identification information;
a TA value of a target cell; and
Contention Free Random Access (CFRA) resource information.

In some embodiments, the recording the first information includes one or more of the following:
recording the first information in one report; and
recording the first information in different reports, and establishing an association relationship among the different reports.

In some embodiments, the establishing the association relationship among the different reports includes one or more of the following:
establishing the association relationship among the different reports through parameters in the different reports;
setting indication information in a report, and establishing the association relationship among the different reports through the indication information;
establishing the association relationship among the different reports through a timestamp; and
establishing the association relationship among the different reports through identification information of the terminal.

In some embodiments, the method further includes:
receiving a request message transmitted by a network device;
the transmitting the first information to the network device includes:
transmitting the first information to the network device according to the request message.

In some embodiments, before receiving the request message transmitted by the network device, the method further includes:
transmitting sixth indication information to the network device, where the sixth indication information is configured to indicate that the terminal stores the first information.

An embodiment of the present disclosure provides a mobility failure handling method, which is applied to a network device. The method includes:
receiving, by a network device, first information transmitted by a terminal, where the first information is recorded in a case that the terminal is configured with LTM configuration information and a failure occurs, and the first information is failure information related to LTM.

In some embodiments, the failure includes a single failure and/or consecutive failures, and the consecutive failures include at least two failures.

In some embodiments, the single failure includes one of the following:
performing LTM failure;
RLF occurring in a source cell; and
performing traditional cell switch failure.

In some embodiments, the consecutive failures include one of the following:
performing LTM failure, and failure in recovery through LTM;
RLF occurring in a source cell, and failure in recovery through LTM;
performing traditional cell switch failure, and failure in recovery through LTM;
performing LTM failure, successful recovery through LTM, and RLF occurring within first time after accessing a target cell; and
RLF occurring in a source cell, successful recovery through LTM, and RLF occurring within second time after accessing a target cell.
performing traditional cell switch failure, successful recovery through LTM, and RLF occurring within third time after accessing a target cell.

In some embodiments, the first information includes one or more of the following:
related information of performing LTM failure;
related information of LTM recovery failure;
time-related information of occurrence of failure; and
indication information of whether subsequent LTM is supported.

In some embodiments, the related information of performing LTM failure includes one or more of the following:
first indication information, configured to indicate an LTM execution type;
information of LTM cell switch;
identification information of an LTM candidate cell;
L1 measurement result information of the LTM candidate cell;
L1 measurement configuration information of the LTM candidate cell;
information of a TCI state activated in advance;
second indication information, configured to indicate that an execution manner of LTM is a RACH or non-RACH; and
a TA value of a target cell determined by the terminal.

CG configuration information of the target cell;
a value of an LTM timer;
time between a moment at which the terminal receives LTM configuration information and a moment at which the terminal performs LTM failure;
time between a moment at which the terminal performs LTM failure and a moment at which the first information is transmitted to the network device;
reference configuration information;
configuration information of the LTM candidate cell; and
configuration information executed by the candidate cell.

In some embodiments, the related information of LTM recovery failure includes one or more of the following:
identification information of an LTM recovery cell;
third indication information, configured to indicate whether the terminal obtains a TA value of the LTM recovery cell;
a TA value of the LTM recovery cell determined by the terminal;
fourth indication information, configured to indicate that an LTM recovery process is a RACH process or a non-RACH process;
fifth indication information, configured to indicate whether the terminal is downlink-synchronized with the LTM recovery cell;
CG configuration information of the LTM recovery cell; and
reference configuration information;
configuration information of the LTM recovery cell; and
identification information of a cell in which Radio Link Failure occurs.

In some embodiments, the time-related information of occurrence of failure includes one or more of the following:
time between a moment at which the terminal receives LTM configuration information and a moment at which RLF occurs;
time between a moment at which the terminal receives LTM configuration information and a moment at which traditional cell switch failure occurs;
time between a moment at which the terminal receives LTM configuration information and a moment at which the first information is transmitted to the network device;
time between a moment at which RLF occurs in the terminal and a moment at which the first information is transmitted to the network device; and
time between a moment at which traditional cell switch failure occurs in the terminal and a moment at which the first information is transmitted to the network device.

In some embodiments, the information of LTM cell switch includes one or more of the following:
TCI state identification information;
target configuration identification information;
a TA value of a target cell; and
CFRA resource information.

In some embodiments, the first information is recorded in one report, and/or the first information is recorded in different reports, and the different reports are associated with each other.

In some embodiments, the different reports are associated through one or more of the following:
parameters in the different reports;
indication information in the reports;
a timestamp; and
identification information of the terminal.

In some embodiments, before receiving the first information transmitted by the terminal, the method further includes:
transmitting a request message to the terminal.

In some embodiments, before transmitting the request message to the terminal, the method further includes:
receiving sixth indication information transmitted by the terminal, where the sixth indication information is configured to indicate that the terminal stores the first information.

In some embodiments, the method further includes:
performing LTM mobility optimization according to the first information; and/or transmitting the first information to a first node, where the first information is used by the first node to perform LTM mobility optimization according to the first information.

An embodiment of the present disclosure provides a terminal, including: a memory, a transceiver, and a processor:
the memory is configured to store a computer program; the transceiver is configured to receive and transmit data under control of the processor; and the processor is configured to read the computer program in the memory and perform the following operations:
in a case that the terminal is configured with Layer 1 and/or Layer 2 triggered mobility LTM configuration information, if a failure occurs, recording first information, where the first information is failure information related to LTM; and
transmitting the first information to a network device.

In some embodiments, the processor is configured to read the computer program in the memory and perform one or more of the following operations:
in a case that the terminal is configured with Layer 1 and/or Layer 2 triggered mobility LTM configuration information, if a single failure occurs, recording the first information; and
in a case that the terminal is configured with Layer 1 and/or Layer 2 triggered mobility LTM configuration information, if consecutive failures occur, recording the first information, where the consecutive failures include at least two failures.

In some embodiments, the single failure includes one of the following:
performing LTM failure;
RLF occurring in a source cell; and
performing traditional cell switch failure.

In some embodiments, the consecutive failures include one of the following:
performing LTM failure, and failure in recovery through LTM;
RLF occurring in a source cell, and failure in recovery through LTM;
performing traditional cell switch failure, and failure in recovery through LTM;
performing LTM failure, successful recovery through LTM, and RLF occurring within first time after accessing a target cell;
RLF occurring in a source cell, successful recovery through LTM, and RLF occurring within second time after accessing a target cell; and
performing traditional cell switch failure, successful recovery through LTM, and RLF occurring within third time after accessing a target cell.

In some embodiments, the first information includes one or more of the following:
related information of performing LTM failure;
related information of LTM recovery failure;
time-related information of occurrence of failure; and
indication information of whether subsequent LTM is supported.

In some embodiments, the processor is configured to read the computer program in the memory and perform one or more of the following operations:
first indication information, configured to indicate an LTM execution type;
information of LTM cell switch;
identification information of an LTM candidate cell;
L1 measurement result information of the LTM candidate cell;
L1 measurement configuration information of the LTM candidate cell;
information of a TCI state activated in advance;
second indication information, configured to indicate that an execution manner of LTM is a RACH or non-RACH;
a TA value of a target cell determined by the terminal;
CG configuration information of the target cell;
a value of an LTM timer;
time between a moment at which the terminal receives LTM configuration information and a moment at which the terminal performs LTM failure;
time between a moment at which the terminal performs LTM failure and a moment at which the first information is transmitted to the network device;
reference configuration information;
configuration information of the LTM candidate cell; and
configuration information executed by the candidate cell.

In some embodiments, the related information of LTM recovery failure includes one or more of the following:
identification information of an LTM recovery cell;
third indication information, configured to indicate whether the terminal obtains a TA value of the LTM recovery cell;
a TA value of the LTM recovery cell determined by the terminal;
fourth indication information, configured to indicate that an LTM recovery process is a RACH process or a non-RACH process;
fifth indication information, configured to indicate whether the terminal is downlink-synchronized with the LTM recovery cell;
CG configuration information of the LTM recovery cell;
reference configuration information;
configuration information of the LTM recovery cell; and
identification information of a cell in which Radio Link Failure occurs.

In some embodiments, the time-related information of occurrence of failure includes one or more of the following:
time between a moment at which the terminal receives LTM configuration information and a moment at which RLF occurs;
time between a moment at which the terminal receives LTM configuration information and a moment at which traditional cell switch failure occurs;
time between a moment at which the terminal receives LTM configuration information and a moment at which the first information is transmitted to the network device;
time between a moment at which RLF occurs in the terminal and a moment at which the first information is transmitted to the network device; and
time between a moment at which traditional cell switch failure occurs in the terminal and a moment at which the first information is transmitted to the network device.

In some embodiments, the information of LTM cell switch includes one or more of the following:
TCI state identification information;
target configuration identification information;
a TA value of a target cell; and
CFRA resource information.

In some embodiments, the processor is configured to read the computer program in the memory and perform one or more of the following operations:
recording the first information in one report; and
recording the first information in different reports, and establishing an association relationship among the different reports.

In some embodiments, the processor is configured to read the computer program in the memory and perform one or more of the following operations:
establishing the association relationship among the different reports through parameters in the different reports;
setting indication information in a report, and establishing the association relationship among the different reports through the indication information;
establishing the association relationship among the different reports through a timestamp; and
establishing the association relationship among the different reports through identification information of the terminal.

In some embodiments, the processor is configured to read the computer program in the memory and perform the following operations:
receiving a request message transmitted by a network device;
the transmitting the first information to the network device includes:
transmitting the first information to the network device according to the request message.

In some embodiments, the processor is configured to read the computer program in the memory and perform the following operations:
transmitting sixth indication information to the network device, where the sixth indication information is configured to indicate that the terminal stores the first information.

An embodiment of the present disclosure provides a network device, including: a memory, a transceiver, and a processor:
the memory is configured to store a computer program; the transceiver is configured to receive and transmit data under control of the processor; and the processor is configured to read the computer program in the memory and perform the following operations:
receiving first information transmitted by a terminal, where the first information is recorded in a case that the terminal is configured with LTM configuration information and a failure occurs, and the first information is failure information related to LTM.

In some embodiments, the failure includes a single failure and/or consecutive failures, and the consecutive failures include at least two failures.

In some embodiments, the single failure includes one of the following:
performing LTM failure;
RLF occurring in a source cell; and
performing traditional cell switch failure.

In some embodiments, the consecutive failures include one of the following:
performing LTM failure, and failure in recovery through LTM;
RLF occurring in a source cell, and failure in recovery through LTM;
performing traditional cell switch failure, and failure in recovery through LTM;
performing LTM failure, successful recovery through LTM, and RLF occurring within first time after accessing a target cell;
RLF occurring in a source cell, successful recovery through LTM, and RLF occurring within second time after accessing a target cell; and
performing traditional cell switch failure, successful recovery through LTM, and RLF occurring within third time after accessing a target cell.

In some embodiments, the first information includes one or more of the following:
related information of performing LTM failure;
related information of LTM recovery failure;
time-related information of occurrence of failure; and
indication information of whether subsequent LTM is supported.

In some embodiments, the related information of performing LTM failure includes one or more of the following:
first indication information, configured to indicate an LTM execution type;
information of LTM cell switch;
identification information of an LTM candidate cell;
L1 measurement result information of the LTM candidate cell;
L1 measurement configuration information of the LTM candidate cell;
information of a TCI state activated in advance;
second indication information, configured to indicate that an execution manner of LTM is a RACH or non-RACH;
a TA value of a target cell determined by the terminal;
CG configuration information of the target cell;
a value of an LTM timer;
time between a moment at which the terminal receives LTM configuration information and a moment at which the terminal performs LTM failure;
time between a moment at which the terminal performs LTM failure and a moment at which the first information is transmitted to the network device;
reference configuration information;
configuration information of the LTM candidate cell; and
configuration information executed by the candidate cell.

In some embodiments, the related information of LTM recovery failure includes one or more of the following:
identification information of an LTM recovery cell;
third indication information, configured to indicate whether the terminal obtains a TA value of the LTM recovery cell;
a TA value of the LTM recovery cell determined by the terminal;
fourth indication information, configured to indicate that an LTM recovery process is a RACH process or a non-RACH process;
fifth indication information, configured to indicate whether the terminal is downlink-synchronized with the LTM recovery cell;
CG configuration information of the LTM recovery cell;
reference configuration information; and
configuration information of the LTM recovery cell.
identification information of a cell in which RLF occurs.

In some embodiments, the time-related information of occurrence of failure includes one or more of the following:
time between a moment at which the terminal receives LTM configuration information and a moment at which RLF occurs;
time between a moment at which the terminal receives LTM configuration information and a moment at which traditional cell switch failure occurs;
time between a moment at which the terminal receives LTM configuration information and a moment at which the first information is transmitted to the network device;
time between a moment at which RLF occurs in the terminal and a moment at which the first information is transmitted to the network device; and
time between a moment at which traditional cell switch failure occurs in the terminal and a moment at which the first information is transmitted to the network device.

In some embodiments, the information of LTM cell switch includes one or more of the following:
TCI state identification information;
target configuration identification information;
a TA value of a target cell; and
CFRA resource information.

In some embodiments, the first information is recorded in one report, and/or the first information is recorded in different reports, and the different reports are associated with each other.

In some embodiments, the different reports are associated through one or more of the following:
parameters in the different reports;
indication information in the reports;
a timestamp; and
identification information of the terminal.

In some embodiments, the processor is configured to read the computer program in the memory and perform the following operations:
transmitting a request message to the terminal.

In some embodiments, the processor is configured to read the computer program in the memory and perform the following operations:
receiving sixth indication information transmitted by the terminal, where the sixth indication information is configured to indicate that the terminal stores the first information.

In some embodiments, the processor is configured to read the computer program in the memory and perform the following operations:
performing LTM mobility optimization according to the first information; and/or transmitting the first information to a first node, where the first information is used by the first node to perform LTM mobility optimization according to the first information.

An embodiment of the present disclosure provides a mobility failure handling apparatus, including:
a recording unit, configured to record first information in a case that a terminal is configured with Layer 1 and/or Layer 2 triggered mobility LTM configuration information and a failure occurs, where the first information is failure information related to LTM; and
a first transmitting unit, configured to transmit the first information to a network device.

An embodiment of the present disclosure provides a mobility failure handling apparatus, including:
a first receiving unit, configured to receive first information transmitted by a terminal, where the first information is recorded in a case that the terminal is configured with LTM configuration information and a failure occurs, and the first information is failure information related to LTM.

An embodiment of the present disclosure provides a processor readable storage medium, storing a computer program, where the computer program is executed by a processor to implement steps of the above mobility failure handling method.

The above technical solutions of the present disclosure have the following beneficial effects.

In the embodiments of the present disclosure, when a terminal is configured with LTM configuration information and a failure occurs in the terminal, failure information related to LTM is recorded and reported to a network device, so that the network device or other related nodes can perform mobility optimization.

### BRIEF DESCRIPTION OF THE DRAWINGS

FIG. 1 shows a first schematic flow chart of a mobility failure handling method according to an embodiment of the present disclosure;
FIG. 2 shows a second schematic flow chart of a mobility failure handling method according to an embodiment of the present disclosure;
FIG. 3 shows a first schematic structural diagram of a mobility failure handling apparatus according to an embodiment of the present disclosure;
FIG. 4 shows a second schematic structural diagram of a mobility failure handling apparatus according to an embodiment of the present disclosure;
FIG. 5 shows a schematic structural diagram of a terminal according to an embodiment of the present disclosure;
FIG. 6 shows a schematic structural diagram of a network device according to an embodiment of the present disclosure.

### DETAILED DESCRIPTION

In order to make a to-be-solved technical problem, a technical solution and advantages of the present disclosure clearer, a detailed description will be given below in conjunction with the accompanying drawings and specific embodiments. In the following description, specific details such as specific configurations and components are provided merely to assist in a comprehensive understanding of the embodiments of the present disclosure. Therefore, those skilled in the art should be appreciated that various changes and modifications can be made to the embodiments described herein without departing from the scope and spirit of the present disclosure. In addition, for clarity and conciseness, descriptions of known functions and constructions have been omitted.

It should be appreciated that "an embodiment" or "one embodiment" mentioned throughout the specification means that specific features, structures, or characteristics related to the embodiment are included in at least one embodiment of the present disclosure. Therefore, words "in an embodiment" or "in one embodiment" appearing throughout the entire specification may not necessarily refer to the same embodiment. In addition, these specific features, structures, or characteristics can be combined in one or more embodiments in any suitable manner.

In various embodiments of the present disclosure, it should be appreciated that the size of a sequence number of each of the following processes does not imply the order of execution, and the execution order of each process should be determined based on the function and internal logic of the each process, which should not constitute any limitations on the implementation process of the present disclosure.

The term "and/or" in the embodiments of the present disclosure describes an association relationship of associated objects, indicating that there may be three types of relationships. For example, A and/or B, which can represent three situations of A alone, both A and B, and B alone. The character "/" generally indicates that the associated objects before and after the character is in an "or" relationship.

The term "multiple" in the embodiments of the present disclosure refers to two or more, and other quantifiers are similar thereto.

The technical solution of embodiments of the present disclosure will be clearly and completely described hereinafter in conjunction with the accompanying drawings. Apparently, the described embodiments merely relate to a part of, rather than all of, the embodiments of the present disclosure, and based on these embodiments, a person of ordinary skill in the art may obtain other embodiments without creative effort, which shall also fall within the scope of the present disclosure.

A network device transmits an LTM cell switch command to UE based on an L1 measurement result reported by the UE. When the UE receives the LTM cell switch command transmitted by the network device, the UE performs LTM cell switch. If the UE fails to perform MCG LTM cell switch, the UE performs a cell selection process. If a target cell selected by UE cell selection is an LTM candidate cell, the UE performs LTM recovery. When the target cell selected by UE cell selection is not the LTM candidate cell, the UE triggers a reestablishment process. If the target cell selected by UE cell selection is the LTM candidate cell, when the UE fails to perform LTM recovery, the UE triggers the reestablishment process. For a case in which LTM mobility failure occurs in the UE, there is currently no optimization method. The embodiments of the present disclosure provide a mobility failure handling method, apparatus, terminal, and network device, so as to optimize a problem that the terminal has an LTM mobility failure.

The method and the apparatus are based on the same inventive concept. Since principles of the method and the apparatus for solving problems are similar, implementations of the apparatus and the method can refer to each other, and repeated descriptions are omitted herein.

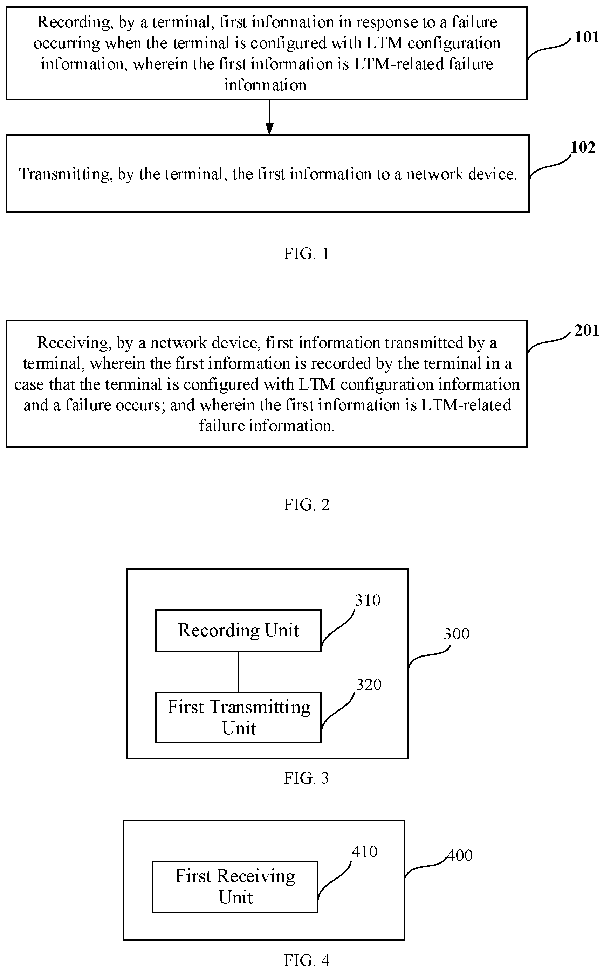

As shown in FIG. 1, an embodiment of the present disclosure provides a mobility failure handling method, which is applied to a terminal, and specifically includes the following steps:
Step 101, in a case that the terminal is configured with Layer 1 and/or Layer 2 triggered mobility LTM configuration information, if a failure occurs, recording first information, where the first information is failure information related to LTM.
Step 102, transmitting, by the terminal, the first information to a network device.

In this embodiment, the network device configures LTM configuration information for the terminal. If a failure occurs in the terminal, failure information related to LTM is recorded and reported to the network device. The network device can perform LTM mobility optimization according to the failure information related to LTM, or the network device transmits the failure information related to LTM to other related nodes for LTM mobility optimization. In some embodiments, the failure occurring in the terminal may be LTM execution failure or other failure conditions.

In some embodiments, the LTM may be LTM on a Master Cell Group (MCG) side or LTM on a Secondary Cell Group (SCG) side.

In the embodiments of the present disclosure, when the terminal is configured with LTM configuration information and a failure occurs in the terminal, failure information related to LTM is recorded and reported to the network device, so that the network device or other related nodes perform mobility optimization.

As an optional embodiment, the in a case that the terminal is configured with Layer 1 and/or Layer 2 triggered mobility LTM configuration information, if the failure occurs, recording the first information includes one or more of the following:
(1) In a case that a terminal is configured with mobility LTM configuration information triggered by Layer 1 and/or Layer 2, if a single failure occurs, recording the first information;
(2) In a case that a terminal is configured with mobility LTM configuration information triggered by Layer 1 and/or Layer 2, if consecutive failures occur, recording the first information, wherein the consecutive failures include at least two failures.

In this embodiment, the terminal may record failure information related to LTM in a case that a single failure occurs, and may also record failure information related to LTM in a case that consecutive failures occur. For example: the terminal may record failure information when a first failure occurs and report the failure information to a network device; and/or, the terminal records failure information and reports the failure information to the network device when two or more consecutive failures occur.

In some embodiments, the single failure includes one of the following:
11) execution of LTM fails; for example: execution of LTM by the terminal fails, but LTM recovery succeeds or reestablishment succeeds, the terminal only undergoes one LTM execution failure, and the terminal records and reports failure information related to LTM.
12) a RLF occurs in a source cell; for example: an RLF occurs in the source cell of the terminal, but LTM recovery succeeds or reestablishment succeeds, the terminal only undergoes one RLF failure, and the terminal may record and report failure information related to LTM.
13) execution of a legacy handover (legacy HO) fails, for example: execution of legacy HO by the terminal fails, but LTM recovery succeeds or reestablishment succeeds, the terminal only undergoes one legacy HO failure, and the terminal records and reports failure information related to LTM. The legacy handover is, for example, a legacy L3 handover, or a legacy Primary SCG Cell (PSCell) change.

The above LTM recovery success means that, when the UE performs a cell selection process, a target cell selected is a candidate cell among LTM candidate cells, the UE directly performs recovery by using execution configuration information of the candidate cell, and the recovery succeeds.

Wherein, the candidate cell execution configuration information is candidate cell configuration information executed by the UE when performing LTM, and the candidate cell execution configuration information may be configuration information of the LTM candidate cell (when the configuration information of the LTM candidate cell is a complete configuration); or, the candidate cell execution configuration information is reference configuration information + configuration information of the LTM candidate cell (when the configuration information of the LTM candidate cell is delta configuration based on the reference configuration information).

In some embodiments, the consecutive failures include one of the following:
21) execution of LTM fails, and LTM recovery fails;
   In this embodiment, the failure of LTM recovery means that: after the terminal fails in performing LTM, cell selection is performed, a cell selected in the cell selection is a candidate cell among LTM candidate cells, the terminal directly performs recovery by using execution configuration information of the candidate cell, and the recovery fails, and then the terminal may record the first information.
22) a radio link failure (RLF) occurs in a source cell, and LTM recovery fails;
   In this embodiment, the failure of LTM recovery indicates that: after an RLF occurs in the source cell of the terminal, cell selection is performed, a cell selected in the cell selection is a candidate cell among LTM candidate cells, the terminal performs recovery by using execution configuration information of the candidate cell, and the recovery fails. In this case, the terminal may record the first information.
23) execution of a legacy handover (legacy HO) fails, and LTM recovery fails.
   In this embodiment, the failure of LTM recovery indicates that: after legacy HO fails, cell selection is performed, a cell selected in the cell selection is a candidate cell among LTM candidate cells, the terminal performs recovery by using execution configuration information of the candidate cell, and the recovery fails. In this case, the terminal may record the first information.
24) execution of LTM fails, LTM recovery succeeds, and an RLF occurs within first time after access to a target cell;
   The first time is a relatively short time, and may be a preset value. Execution of LTM by the terminal fails, LTM recovery succeeds, but an RLF occurs in the target cell soon, and then the first information may be recorded. The LTM recovery success means that, when the UE performs a cell selection process, a target cell selected is a candidate cell among LTM candidate cells, the UE directly performs recovery by using execution configuration information of the candidate cell, and the recovery succeeds.
25) an RLF occurs in a source cell, LTM recovery succeeds, and an RLF occurs within second time after access to a target cell;

   The second time is a relatively short time, and may be a preset value. The second time may be the same as or different from the first time, which is not limited herein. After an RLF occurs in the source cell, LTM recovery succeeds, but an RLF occurs in the target cell soon, and then the first information may be recorded.

The LTM recovery success means that, when the UE performs a cell selection process, a target cell selected is a candidate cell among LTM candidate cells, the UE directly performs recovery by using execution configuration information of the candidate cell, and the recovery succeeds.

26) execution of a legacy handover fails, LTM recovery succeeds, and an RLF occurs within third time after access to a target cell.

The third time is a relatively short time, and may be a preset value. The third time may be the same as or different from the first time and/or the second time, which is not limited herein. After the terminal performs legacy HO, LTM recovery succeeds, but an RLF occurs in the target cell soon, and then the first information may be recorded. The LTM recovery success means that, when the UE performs a cell selection process, a target cell selected is a candidate cell among LTM candidate cells, the UE directly performs recovery by using execution configuration information of the candidate cell, and the recovery succeeds.

As an optional embodiment, the first information includes one or more of the following:
(1) related information of execution of LTM failure;
   In some embodiments, the related information of execution of LTM failure includes one or more of the following:
   11) first indication information, configured to indicate an LTM execution type; the first indication information may indicate that the execution type is "LTM".
   12) information of LTM cell switch; in some embodiments, the information of LTM cell switch includes one or more of the following: TCI state identification information; target configuration identification information; a TA value of a target cell; and CFRA resource information.

In some embodiments, the TCI state may include an uplink and/or downlink TCI state.

In some embodiments, the CFRA resource information includes one or more of the following: a Random Access Preamble index, a Synchronization Signal (SS)/Physical Broadcast Channel (PBCH) index, an uplink carrier (for example: a Supplementary Uplink (SUL) or a Normal Uplink (NUL)), and a Physical Random Access Channel (PRACH) mask index.
13) identification information of an LTM candidate cell; the identification information may be a Physical Cell Identifier (PCI) + frequency point information, or a Cell Global Identifier (CGI).
14) layer 1 measurement result information of an LTM candidate cell; for example, Layer 1 reference signal received power (L1-RSRP) information, etc.;
15) layer 1 measurement configuration information of an LTM candidate cell; for example, information such as an SSB frequency point, a subcarrier spacing, and an SSB periodicity;
16) information of TCI state(s) activated in advance; the TCI state may include an uplink and/or downlink TCI state. Wherein, the TCI state activated in advance is a TCI state activated by the terminal before receiving an LTM command based on a command of a network device (for example, a MAC CE), or is a TCI state activated by the network device through a MAC CE received before the terminal receives the LTM command.
17) second indication information, configured to indicate that an execution mode of LTM is RACH or RACH-less; the second indication information is configured to indicate whether the LTM is performed in a RACH mode or in a RACH-less mode.
18) a TA value of a target cell determined by the terminal; for example: a TA value of an LTM target cell obtained through calculation by the terminal, or a TA value sent by the network device and received by the terminal;
19) CG configuration information of the target cell; the CG configuration information may be configured by the network device for the target cell, and the CG configuration information is used for the UE to send UL data when accessing the target cell in a RACH-less mode;
110) a value of an LTM timer; for example, a T304 value.
111) time between a moment at which the terminal receives LTM configuration information and a moment at which execution of LTM fails; a unit of the time may be millisecond, second, minute, hour, etc., which is not limited herein.
112) time between a moment at which execution of LTM fails by the terminal and a moment at which the first information is sent by the terminal to the network device; a unit of the time may be millisecond, second, minute, hour, etc., which is not limited herein.
113) reference configuration information, wherein the reference configuration information is sent by the network device to the UE, and is common configuration information for configuration information of all LTM candidate cells of non-complete configurations, and the UE generates a complete configuration by applying configuration information of an LTM candidate cell on the basis of the reference configuration information;
114) configuration information of an LTM candidate cell, wherein each candidate cell is associated with one piece of LTM candidate cell configuration information, and the configuration information of one candidate cell may be a complete configuration, or may be a delta configuration based on reference configuration information.
115) candidate cell execution configuration information.

The candidate cell execution configuration information is candidate cell configuration information executed by the UE when performing LTM, and the candidate cell execution configuration information may be configuration information of the LTM candidate cell (when the configuration information of the LTM candidate cell is a complete configuration); or, the candidate cell execution configuration information is reference configuration information + configuration information of the LTM candidate cell (when the configuration information of the LTM candidate cell is delta configuration based on the reference configuration information).

(2) related information of LTM recovery failure; the LTM recovery failure may include: failure of recovery through LTM; and/or, success of recovery through LTM, but RLF occurs in the target cell soon.

In some embodiments, the related information of LTM recovery failure includes one or more of the following:
identification information of an LTM recovery cell; the identification information may be PCI + frequency point, or CGI.
third indication information, configured to indicate whether the terminal obtains a TA value of the LTM recovery cell; the related information of LTM recovery failure may include indication information indicating whether the UE has obtained the TA value of the LTM recovery cell, and the obtaining manner may be a TA value of the LTM recovery cell calculated by the UE or a TA value of the LTM recovery cell received by the UE from the network device;
a TA value of the LTM recovery cell determined by the terminal; the TA value may be a TA value of the LTM recovery cell calculated by the UE or a TA value of the LTM recovery cell received by the UE from the network device;
fourth indication information, configured to indicate whether an LTM recovery process is a RACH process or a RACH-less process;
fifth indication information, configured to indicate whether the terminal is downlink synchronized with the LTM recovery cell; the related information of LTM recovery failure may include indication information indicating whether the UE has been downlink synchronized with the LTM recovery cell;
CG configuration information of the LTM recovery cell; the CG configuration information may be preconfigured by the network device for the LTM recovery cell, and the CG configuration information is used for the UE to send UL data when accessing the recovery cell in a RACH-less mode;
reference configuration information;
configuration information of the LTM recovery cell; the configuration information of the LTM recovery cell is configuration information of the LTM candidate cell corresponding to the LTM recovery cell configured by the network for the UE, and may be complete configuration information, or may be delta configuration information based on reference configuration.
identification information of a cell in which RLF occurs, wherein the information may be directed to a case that the terminal succeeds in recovery through LTM, but RLF occurs in the target cell soon, and the terminal may record the identification information of the cell in which RLF occurs.

(3) time-related information of occurrence of failure;
In some embodiments, the time-related information of occurrence of failure includes one or more of the following:
time between a moment at which the terminal receives LTM configuration information and a moment at which RLF occurs;
time between a moment at which the terminal receives LTM configuration information and a moment at which failure of legacy HO occurs;
time between a moment at which the terminal receives LTM configuration information and a moment at which the first information is sent by the terminal to the network device;
time between a moment at which RLF occurs in the terminal and a moment at which the first information is sent by the terminal to the network device;
time between a moment at which failure of legacy HO occurs in the terminal and a moment at which the first information is sent by the terminal to the network device. Units of the above time may be millisecond, second, minute, hour, etc., which are not limited herein.

(4) indication information indicating whether subsequent LTM is supported, wherein the indication information is used for indicating whether the UE will perform subsequent LTM, wherein the subsequent LTM means that after the UE performs one LTM cell switch, the UE does not release respective configuration information of LTM (that is, the UE does not release all configuration information related to LTM), and continues to perform subsequent LTM cell switch.

As an optional embodiment, the recording the first information includes one or more of the following:
recording the first information in one report;
recording the first information in different reports, and establishing an association relationship among the different reports.

In this embodiment, the terminal recording the first information may be that the terminal records multiple pieces of failure-related information in the first information in one report, or may be that the terminal records multiple pieces of failure-related information in the first information in different reports and establishes an association. For a single failure, the terminal records the first information in one report.

Wherein, the terminal records the first information in a report, and the report may be in one or more forms of an RLF report, another existing report, introduction of a new report, and the like. The other existing report is, for example, a Connection Establishment Failure (CEF) report, a RACH report, a Successful Handover Report (SHR), and the like.

In some embodiments, the establishing an association relationship among different reports includes one or more of the following:
establishing an association relationship among different reports through parameters in different reports, for example: two reports may include a same parameter, if values of the parameter are the same, the two reports are related reports, and if the parameter values are different, the two reports are unrelated reports;
setting indication information in a report, and establishing an association relationship among different reports through the indication information, for example: adding indication information to report A to indicate that the report A has a related report B; and/or, adding indication information to report B to indicate that the report B has a related report A;
establishing an association relationship among different reports through timestamps, that is, introducing timestamp information into a plurality of reports, and if timestamp information in the plurality of reports is the same or similar, the reports are related reports;
establishing an association relationship among different reports through identification information of the terminal, for example: associating through a Cell Radio Network Temporary Identifier (C-RNTI), introducing the C-RNTI into report A, and also introducing the C-RNTI into report B, the two C-RNTIs both being C-RNTIs for the UE in the same cell (for example, both being the C-RNTI of the UE in a source cell or both being the C-RNTI of the UE in a target cell), therefore, when the C-RNTI in report A is the same as the C-RNTI in report B, the report A and the report B are associated reports, and if they are different, the report A and the report B are unrelated reports.

In this embodiment, the terminal records a plurality of pieces of failure-related information in the first information in different reports and performs association, wherein an association manner may be one or more of the above: performing association by using parameters in a plurality of reports; introducing indication information into reports for association; performing association by using timestamps; and performing association by using terminal identification information.

As an optional embodiment, the method further includes:
receiving a request message sent by a network device;
the sending the first information to the network device includes:
sending the first information to the network device according to the request message.

In some embodiments, before receiving a request message sent by the network device, the method further includes:
sending sixth indication information to the network device, wherein the sixth indication information is used for indicating that the terminal stores the first information.

In this embodiment, the terminal reporting the first information may be: the terminal directly reporting the first information to the network device; or, the network device sending a request message to the terminal to request the first information, and the terminal reporting the first information based on a condition of the network device; or, after recording the first information, the terminal sending available indication information to the network device to notify the network device that the terminal stores the failure information related to LTM, so that the network device may request the first information from the terminal according to the indication information, and the terminal reports the first information based on the request of the network device.

After receiving the first information, the network device may perform LTM mobility optimization, or forward the first information to a relevant node through interface signaling for LTM mobility optimization, wherein the interface signaling may be Xn, X2, E1, or F1 interface signaling.

The implementation process of the mobility failure processing method will be illustrated below by way of example.

Specifically, the method includes:
step (1): the UE undergoes consecutive failures.

When the UE is configured with LTM configuration information and the UE performs LTM, scenarios in which the terminal undergoes consecutive failures may include one or more of the following scenarios:
Scenario 1: the UE fails in performing LTM, and LTM recovery fails;
Scenario 2: the UE undergoes RLF in a source cell, and LTM recovery fails;
Scenario 3: the UE fails in performing legacy HO, and LTM recovery fails;
Scenario 4: the UE fails in performing LTM, LTM recovery succeeds, but RLF occurs in a target cell soon;
Scenario 5: the UE undergoes RLF in a source cell, LTM recovery succeeds, but RLF occurs in a target cell soon;
Scenario 6: the UE fails in performing legacy HO, LTM recovery succeeds, but RLF occurs in a target cell soon.

In addition, consecutive LTM failures may also be the following scenarios:
Scenario 7: the UE fails in performing LTM, LTM recovery succeeds, and RLF occurs in the target cell after a period of time;
Scenario 8: the UE undergoes RLF in a source cell, LTM recovery succeeds, and RLF occurs in the target cell after a period of time;
Scenario 9: the UE fails in performing legacy HO, LTM recovery succeeds, and RLF occurs in the target cell after a period of time.

Step (2): the UE records the first information.

When the UE undergoes one of the consecutive failure scenarios in the above step (1), the UE records one or more of the following pieces of failure information related to LTM:
a) first related information of LTM execution failure;
b) second related information of LTM recovery failure;
c) third related information of LTM recovery failure;
d) fourth related information of other LTM failures.

Wherein, the above a) first related information of LTM execution failure may include one or more of the following information:
a1: indication information of an LTM execution type, that is, the type is "LTM";
the indication information of the LTM execution type may be 1-bit indication information, configured to indicate that a handover type executed most recently is "LTM".
a2: information in LTM cell switch (one or more);
the information in the LTM cell switch includes TCI state identification information, target configuration identification information, a TA value of a target cell, and CFRA resource information. Wherein the TA value of the target cell is a TA value for the target cell obtained through an order of a PDCCH, the CFRA resource information includes dedicated RACH configuration information required by the UE to access the target cell, the target configuration identification information indicates which target cell the UE will switch to or which target configuration the UE will apply, and the TCI state identification information may be understood as indicating a beam applied by the UE after switching to the target cell.
a3: identification information of each LTM candidate cell.

The identification information of each LTM candidate cell may be PCI + frequency point information, or CGI. The identification information of each LTM candidate cell may be reported in the following manners:
Manner 1: a candidate cell identification information list, that is, all candidate cell identification information is placed into one list, and each entry in the list is identification information of one candidate cell;
Manner 2: indication information in L3 neighboring cell measurement, that is, in neighboring cell measurement result reporting, for each neighboring cell, indication information is added to indicate whether the neighboring cell is an LTM candidate cell; in addition, for an LTM candidate cell that is not in the L3 neighboring cell measurement, recording is performed in the manner of Manner 1, that is, recording is performed in a list manner;
Manner 3: obtaining candidate cell identification information through L1 measurement result reporting or L1 measurement configuration information.
a4: L1 measurement result information of each LTM candidate cell. The L1 measurement result information of each LTM candidate cell may be L1-RSRP information or the like.
a5: layer 1 measurement configuration information of an LTM candidate cell.

The configured layer 1 measurement configuration information of each LTM candidate cell may be information such as a configured SSB frequency point, a subcarrier spacing, and an SSB periodicity.
a6: information of TCI state(s) activated in advance.

The information of TCI state(s) activated in advance is information of TCI state(s) activated in advance sent by the network device through a MAC CE.
a7: an execution mode of LTM being a RACH mode or a RACH-less mode, and may indicate whether an access mode of most recently performing LTM is the RACH mode or the RACH-less mode;
a8: a TA value of a target cell determined by the UE. The TA value may be a TA value of the target cell calculated by the UE itself.
a9: CG configuration information of the target cell. The CG configuration information may be uplink resources/configured grant configured by the network device for the target cell and used for sending first UL data by the UE after the UE accesses the target cell.
a10: an LTM timer value (for example, a T304 value).
a11: time from the UE receiving LTM configuration information to execution of LTM failure.
a12: time from execution of LTM failure by the UE to reporting of the first information.
a13: reference configuration information.

The reference configuration information is reference configuration configured by the network device for the UE, that is, when the UE generates target cell configuration, the UE needs to combine candidate target cell configuration and the reference configuration to generate complete target cell configuration, that is, the candidate target cell configuration is delta configuration based on the reference configuration.
a14: configuration information of an LTM candidate cell.
a15: candidate cell execution configuration information.

In this embodiment, the above related information of execution of LTM failure may be information that needs to be recorded and reported for a first LTM execution failure. The first related information of LTM execution failure may be recorded and reported when a first failure occurs in Scenario 7 to Scenario 9 in Step (1), or may be recorded and reported when a single LTM execution failure occurs, for example, when execution of LTM fails, but LTM recovery succeeds, and no subsequent failure occurs in the target cell, the above information may be recorded and reported.

For the above b) second related information of LTM recovery failure, one or more of the following information may be included (mainly information that needs to be recorded and reported for an LTM recovery process):
b1: identification information of an LTM recovery cell;
the identification information of the LTM recovery cell may be PCI + frequency point, or CGI. If the UE supports recording information related to LTM in an RLF report, the identification information of the LTM recovery cell (for example, LTMCellId) recorded in the RLF report is global cell identification information (CGI) of a selected cell (if any); otherwise, the identification information is recorded as PCI and frequency point.
b2: indication information indicating whether the UE has obtained a TA value of the LTM recovery cell. The indication information indicates whether the UE has obtained the TA value of the LTM recovery cell, that is, whether the UE has calculated the TA value of the LTM recovery cell by itself.
b3: a TA value of the LTM recovery cell determined by the UE. The TA value may be a TA value of the LTM recovery cell calculated by the UE itself, or a TA value of the LTM recovery cell received by the UE from the network device.
b4: indication information indicating whether an LTM recovery process is a RACH process or a RACH-less process. The indication information may indicate whether a manner in which the UE accesses the LTM recovery cell in the LTM recovery process is a RACH manner or a RACH-less manner.
b5: indication information indicating whether the UE is already downlink synchronized with the LTM recovery cell; the indication information indicates whether, when the UE accesses the LTM recovery cell, the UE is already downlink synchronized with the LTM recovery cell.
b6: CG configuration of the LTM recovery cell;
the CG configuration may be CG configuration preconfigured by the network device for the LTM recovery cell, and is uplink resources/configured grant configured by the network device for the UE and used for sending first UL data when accessing the LTM recovery cell.
b7: reference configuration information; the same as the reference configuration information in the first related information of LTM execution failure, and details are not described herein again.
b8: configuration information of an LTM recovery cell; refers to configuration information of the LTM recovery cell preconfigured by the network device (configuration information of one candidate cell among candidate cells).

For the above c) third related information of LTM recovery failure, one or more of the following information may be included (mainly information that needs to be recorded and reported for RLF occurring in a target cell within a short time after LTM recovery succeeds):
c1: the second related information of LTM recovery failure;
c2: identification information of a failed cell; refers to identification information of the failed target cell in which RLF occurs within a short time after the UE succeeds in performing LTM recovery, and may be PCI + frequency point or CGI.

For the above d) fourth related information of other LTM failures, one or more of the following information may be included (other information that needs to be recorded and reported in addition to the above three types of information):
d1: time from receiving LTM configuration to occurrence of RLF/legacy HO failure;
d2: time from receiving LTM configuration to reporting of the first information;
d3: time from occurrence of RLF/legacy HO failure to reporting of the first information;
d4: indication information indicating whether subsequent LTM is supported; the indication information indicates whether the network device configures the UE to perform subsequent LTM.

In some embodiments, a recording manner of the first information may include:
the first information may be recorded in one or more of the following reports:
an RLF report;
using other existing reports; for example, a CEF report, a RACH report, a SHR, and the like.
introducing a new report.

When content in the first information is respectively recorded in two or more reports, association may be performed in one or more of the following manners:
Manner a: performing association by using parameters in a plurality of reports;
For example: there is a same parameter in the plurality of reports, and the same parameter may be used for association, and after receiving the plurality of reports, if the network device finds that values of the parameter in the plurality of reports are the same, the network device considers that the plurality of reports are associated with a same LTM handover; otherwise, the network device considers that the plurality of reports have no association relationship.
Manner b: introducing indication information into reports for association.

The same indication information may be added into a plurality of reports corresponding to a same LTM handover, so as to indicate that the reports are associated with a same LTM execution. Alternatively, indication information may be introduced into part of the reports to indicate that there are other reports for the current LTM handover, and even indicate how many related reports there are.

In addition, it may also be considered that each report generated for the current LTM execution is uniquely numbered, and when reporting a report, a number of the current report and numbers of associated reports are reported. After receiving the report, the network knows which reports are associated with the current report.

Manner c: performing association by using timestamps.

For example: if timestamps recorded in a plurality of reports are the same, or time intervals among timestamps recorded in the reports are very short, it indicates that the reports are reports associated with a same LTM handover; otherwise, it indicates that the reports are not relevant to the same LTM handover, that is, the reports have no relevance therebetween.

Manner d: performing association by using terminal identification information.

Taking a C-RNTI of a source cell as an example, if a plurality of reports each store C-RNTI information of the source cell for the current LTM execution, after receiving the reports, the network device may determine whether the C-RNTIs of the source cell recorded in the reports are the same, if the C-RNTIs are the same, it indicates that the reports are reports associated with a same LTM handover; and if the C-RNTIs are different, it indicates that the reports are not reports associated with the same LTM handover, that is, the reports have no relevance therebetween.

Step (3): the UE reports the first information.

When the UE generates the first information, the UE may send available indication information to the network in an uplink complete message, so as to notify the network that the UE side stores the first information. Wherein the uplink complete message may be one or more of a Radio Resource Control (RRC) reconfiguration complete message, an RRC connection setup complete message, an RRC connection reestablishment complete message, and an RRC connection resume complete message. The indication information may be 1-bit indication information.

After receiving the available indication information sent by the UE, the network device sends a request message to the UE, to request the UE to report the first information; or, the network may also directly send a request message to the UE to request the UE to report the first information without based on the available indication information, that is, the UE may not report the available indication information to the device.

After receiving request information sent by the network device, the UE reports the first information based on a request of the network device.

The request by the network device and the response by the UE may be transmitted by using a UE information request/response message pair.

Step (4): network optimization.

After receiving the first information sent by the UE, the network device may perform mobility optimization based on the first information, or the network device may send the first information to relevant nodes through interface signaling, such that the relevant nodes perform mobility optimization, wherein the interface signaling may be one or more of Xn interface signaling, X2 interface signaling, E1 interface signaling, and F1 interface signaling.

In this embodiment, when the UE undergoes consecutive LTM failures, the UE may record and report information related to the consecutive LTM failures to the network device, so as to be used by the network to optimize the consecutive LTM failures.

In the embodiments of the present disclosure, when the terminal is configured with LTM configuration information and the terminal undergoes failure, failure information related to LTM is recorded and reported to the network device, so that the network device or other relevant nodes perform mobility optimization.

As shown in FIG. 2, an embodiment of the present disclosure further provides a mobility failure processing method, applied to a network device, including:
Step 201: receiving, by a network device, first information sent by a terminal, wherein the first information is recorded when the terminal is configured with LTM configuration information and undergoes failure; and the first information is failure information related to LTM.

In this embodiment, the network device configures LTM configuration information for the terminal, and if the terminal undergoes failure, failure information related to LTM is recorded and reported to the network device.

In some embodiments, the method further includes:
performing LTM mobility optimization according to the first information; and/or, sending the first information to a first node, wherein the first information is used for the first node to perform LTM mobility optimization according to the first information.

In this embodiment, the network device may perform LTM mobility optimization according to the failure information related to LTM, or the network device sends the failure information related to LTM to other relevant nodes to perform LTM mobility optimization. In some embodiments, the failure undergone by the terminal may be LTM execution failure or may be another failure condition. The first node is a node related to the first information.

In some embodiments, the failure includes a single failure and/or consecutive failures, and the consecutive failures include at least two failures.

In this embodiment, the terminal may record failure information related to LTM when a single failure occurs, and may also record failure information related to LTM when consecutive failures occur. For example: the terminal may record failure information when a first failure occurs and report the failure information to a network device; and/or, the terminal records failure information and reports the failure information to the network device when two or more consecutive failures occur.

In some embodiments, the single failure includes one of the following:
failure in performing LTM;
occurrence of RLF in a source cell;
failure in performing legacy handover.

In some embodiments, the consecutive failures include one of the following:
failure in performing LTM, and failure in recovery through LTM;
occurrence of RLF in a source cell, and failure in recovery through LTM;
failure in performing legacy handover, and failure in recovery through LTM;
failure in performing LTM, success in recovery through LTM, and occurrence of RLF within first time after access to a target cell;
occurrence of RLF in a source cell, success in recovery through LTM, and occurrence of RLF within second time after access to a target cell;
failure in performing legacy handover, success in recovery through LTM, and occurrence of RLF within third time after access to a target cell.

In some embodiments, the first information includes one or more of the following:
(1) related information of execution of LTM failure;
   In some embodiments, the related information of execution of LTM failure includes one or more of the following:
   first indication information, configured to indicate an LTM execution type;
   information of LTM cell switch;
   identification information of an LTM candidate cell;
   layer 1 measurement result information of an LTM candidate cell;
   layer 1 measurement configuration information of an LTM candidate cell;
   information of TCI state activated in advance;
   second indication information, configured to indicate that an execution mode of LTM is RACH or non-RACH;
   a TA value of a target cell determined by the terminal;
   CG configuration information of the target cell;
   a value of an LTM timer;
   time between a moment at which the terminal receives LTM configuration information and a moment at which execution of LTM fails;
   time between a moment at which the terminal fails in performing LTM and a moment at which the first information is sent to the network device.
   reference configuration information;
   configuration information of an LTM candidate cell;
   candidate cell execution configuration information.
(2) related information of LTM recovery failure.
   In some embodiments, the related information of LTM recovery failure includes one or more of the following:
   identification information of an LTM recovery cell;
   third indication information, configured to indicate whether the terminal obtains a TA value of the LTM recovery cell;
   a TA value of the LTM recovery cell determined by the terminal; the TA value may be a TA value of the LTM recovery cell calculated by the UE or a TA value of the LTM recovery cell received by the UE from the network device.
   fourth indication information, configured to indicate whether an LTM recovery process is a RACH process or a non-RACH process;
   fifth indication information, configured to indicate whether the terminal is downlink synchronized with the LTM recovery cell;
   CG configuration information of the LTM recovery cell;
   reference configuration information;
   configuration information of the LTM recovery cell;
   identification information of a cell in which RLF occurs.
(3) time-related information of occurrence of failure.
   The time-related information of occurrence of failure includes one or more of the following:
   time between a moment at which the terminal receives LTM configuration information and a moment at which RLF occurs;
   time between a moment at which the terminal receives LTM configuration information and a moment at which failure in performing legacy handover occurs;
   time between a moment at which the terminal receives LTM configuration information and a moment at which the first information is sent to the network device;
   time between a moment at which RLF occurs in the terminal and a moment at which the first information is sent to the network device;
   time between a moment at which failure in performing legacy handover occurs in the terminal and a moment at which the first information is sent to the network device.
(4) indication information indicating whether subsequent LTM is supported.
   In some embodiments, the information of LTM cell switch includes one or more of the following:
   TCI state identification information;
   target configuration identification information;
   a TA value of a target cell;
   CFRA resource information.

As an optional embodiment, the first information is recorded in one report, and/or the first information is recorded in different reports, and different reports have an association relationship therebetween.

In this embodiment, the terminal recording the first information may be that the terminal records a plurality of pieces of failure-related information in the first information in one report, or may be that the terminal records a plurality of pieces of failure-related information in the first information in different reports and establishes association. For a single failure, the terminal records the first information in one report.

Wherein, the terminal records the first information in a report, and the report may be in one or more forms of an RLF report, another existing report, introduction of a new report, and the like. The other existing reports are, for example, a CEF report, a RACH report, an SHR, and the like.

In some embodiments, different reports are associated through one or more of the following:
parameters in different reports; for example: two reports may include a same parameter, if a value of the parameter is the same, the reports are related reports, and if the value of the parameter is different, the reports are unrelated reports;
indication information in reports; for example: adding indication information to report A to indicate that the report A has a related report B, and/or adding indication information to report B to indicate that the report B has a related report A;
timestamps; that is, introducing timestamp information into a plurality of reports, and if timestamp information in the plurality of reports is the same or similar, the reports are related reports;
identification information of the terminal. For example: association is performed through a C-RNTI, the C-RNTI is introduced into report A, and the C-RNTI is also introduced into report B, the two C-RNTIs are both C-RNTIs for the UE in a same cell (for example, both are the C-RNTI of the UE in a source cell, or both are the C-RNTI of the UE in a target cell), therefore, when the C-RNTI in report A is the same as the C-RNTI in report B, the reports are associated reports; and if the C-RNTIs are different, the reports are unrelated reports.

As an optional embodiment, before receiving the first information sent by the terminal, the method further includes: sending a request message to the terminal.

In some embodiments, before sending the request message to the terminal, the method further includes:
receiving sixth indication information sent by the terminal, wherein the sixth indication information is used for indicating that the terminal stores the first information.

In this embodiment, the terminal reporting the first information may be: the terminal directly reporting the first information to the network device; or, the network device sending a request message to the terminal to request the first information, and the terminal reporting the first information based on a condition of the network device; or, after recording the first information, the terminal sending available indication information to the network device, to notify the network device that the terminal stores the first information, so that the network device may request the first information from the terminal according to the indication information, and the terminal reports the first information based on a request of the network device.

After receiving the first information, the network device may perform LTM mobility optimization, or forward the first information to relevant nodes through interface signaling for LTM mobility optimization, wherein the interface signaling may be Xn interface signaling, X2 interface signaling, E1 interface signaling, or F1 interface signaling.

In the embodiments of the present disclosure, when the terminal is configured with LTM configuration information and the terminal undergoes failure, failure information related to LTM is recorded and reported to the network device, and the network device may perform mobility optimization based on the failure information related to LTM; or, the network device sends the failure information related to LTM to other relevant nodes, and the other relevant nodes perform mobility optimization.

The mobility failure processing method of the present disclosure has been introduced in the above embodiments, and below, a corresponding apparatus thereof will be further described in conjunction with the accompanying drawings in the present embodiment.

Specifically, as shown in FIG. 3, an embodiment of the present disclosure provides a mobility failure processing apparatus 300, applied to a terminal, including:
a recording unit 310, configured to, in a case that mobility LTM configuration information triggered by Layer 1 and/or Layer 2 is configured, record first information when failure occurs, wherein the first information is failure information related to LTM;
a first transmitting unit 320, configured to send the first information to a network device.

In some embodiments, the recording unit is configured to implement one or more of the following:
in a case that a terminal is configured with mobility LTM configuration information triggered by Layer 1 and/or Layer 2, if a single failure occurs, recording the first information;
in a case that a terminal is configured with mobility LTM configuration information triggered by Layer 1 and/or Layer 2, if consecutive failures occur, recording the first information, wherein the consecutive failures include at least two failures.

In some embodiments, the single failure includes one of the following:
failure in performing LTM;
occurrence of RLF in a source cell;
failure in performing legacy handover.

In some embodiments, the consecutive failures include one of the following:
failure in performing LTM, and failure in recovery through LTM;
occurrence of RLF in a source cell, and failure in recovery through LTM;
failure in performing legacy handover, and failure in recovery through LTM;
failure in performing LTM, success in recovery through LTM, and occurrence of RLF within first time after access to a target cell;
occurrence of RLF in a source cell, success in recovery through LTM, and occurrence of RLF within second time after access to a target cell;
failure in performing legacy handover, success in recovery through LTM, and occurrence of RLF within third time after access to a target cell.

In some embodiments, the first information includes one or more of the following:
related information of execution of LTM failure;
related information of LTM recovery failure;
time-related information of occurrence of failure;
indication information indicating whether subsequent LTM is supported.

In some embodiments, the related information of execution of LTM failure includes one or more of the following:
first indication information, configured to indicate an LTM execution type;
information of LTM cell switch;
identification information of an LTM candidate cell;
layer 1 measurement result information of an LTM candidate cell;
layer 1 measurement configuration information of an LTM candidate cell;
information of TCI state activated in advance;
second indication information, configured to indicate that an execution mode of LTM is RACH or non-RACH;
a TA value of a target cell determined by the terminal;
CG configuration information of the target cell;
a value of an LTM timer;
time between a moment at which the terminal receives LTM configuration information and a moment at which execution of LTM fails;
time between a moment at which the terminal fails in performing LTM and a moment at which the first information is sent to the network device;
reference configuration information;
configuration information of an LTM candidate cell;
candidate cell execution configuration information.

In some embodiments, the related information of LTM recovery failure includes one or more of the following:
identification information of an LTM recovery cell;
third indication information, configured to indicate whether the terminal obtains a TA value of the LTM recovery cell;
a TA value of the LTM recovery cell determined by the terminal;
fourth indication information, configured to indicate whether an LTM recovery process is a RACH process or a non-RACH process;
fifth indication information, configured to indicate whether the terminal is downlink synchronized with the LTM recovery cell;
CG configuration information of the LTM recovery cell;
reference configuration information;
configuration information of the LTM recovery cell;
identification information of a cell in which RLF occurs.

In some embodiments, the time-related information of occurrence of failure includes one or more of the following:
time between a moment at which the terminal receives LTM configuration information and a moment at which RLF occurs;
time between a moment at which the terminal receives LTM configuration information and a moment at which failure in performing legacy handover occurs;
time between a moment at which the terminal receives LTM configuration information and a moment at which the first information is sent to the network device;
time between a moment at which RLF occurs in the terminal and a moment at which the first information is sent to the network device;
time between a moment at which failure in performing legacy handover occurs in the terminal and a moment at which the first information is sent to the network device.

In some embodiments, the information of LTM cell switch includes one or more of the following:
TCI state identification information;
target configuration identification information;
a TA value of a target cell;
CFRA resource information.

In some embodiments, the recording unit is specifically configured to perform one or more of the following:
recording the first information in one report;
recording the first information in different reports, and establishing an association relationship among the different reports.

In some embodiments, the establishing an association relationship among different reports includes one or more of the following:
establishing an association relationship among different reports through parameters in different reports;
setting indication information in reports, and establishing an association relationship among different reports through the indication information;
establishing an association relationship among different reports through timestamps;
establishing an association relationship among different reports through identification information of the terminal.

In some embodiments, the apparatus further includes:
a second receiving unit, configured to receive a request message sent by the network device;
the first transmitting unit is specifically configured to: send the first information to the network device according to the request message.

In some embodiments, the apparatus further includes:
a second sending unit, configured to send sixth indication information to the network device, wherein the sixth indication information is used for indicating that the terminal stores the first information.

It should be noted herein that the above apparatus provided in the embodiments of the present disclosure can implement all method steps implemented by the above method embodiments applied to the terminal, and can achieve the same technical effects. Details are not described herein again for parts the same as those in the method embodiments and beneficial effects in the present embodiment.

Specifically, as shown in FIG. 4, an embodiment of the present disclosure provides a mobility failure processing apparatus 400, applied to a network device, including:
a first receiving unit 410, configured to receive first information sent by a terminal, wherein the first information is recorded when the terminal is configured with LTM configuration information and undergoes failure; and the first information is failure information related to LTM.

In some embodiments, the failure includes a single failure and/or consecutive failures, and the consecutive failures include at least two failures.

In some embodiments, the single failure includes one of the following:
failure in performing LTM;
occurrence of RLF in a source cell;
failure in performing legacy handover.

In some embodiments, the consecutive failures include one of the following:
failure in performing LTM, and failure in recovery through LTM;
occurrence of RLF in a source cell, and failure in recovery through LTM;
failure in performing legacy handover, and failure in recovery through LTM;
failure in performing LTM, success in recovery through LTM, and occurrence of RLF within first time after access to a target cell;
occurrence of RLF in a source cell, success in recovery through LTM, and occurrence of RLF within second time after access to a target cell;
failure in performing legacy handover, success in recovery through LTM, and occurrence of RLF within third time after access to a target cell.

In some embodiments, the first information includes one or more of the following:
related information of execution of LTM failure;
related information of LTM recovery failure;
time-related information of occurrence of failure;
indication information indicating whether subsequent LTM is supported.

In some embodiments, the related information of execution of LTM failure includes one or more of the following:
first indication information, configured to indicate an LTM execution type;
information of LTM cell switch;
identification information of an LTM candidate cell;
layer 1 measurement result information of an LTM candidate cell;
layer 1 measurement configuration information of an LTM candidate cell;
information of TCI state activated in advance;
second indication information, configured to indicate that an execution mode of LTM is RACH or non-RACH;
a TA value of a target cell determined by the terminal;
CG configuration information of the target cell;
a value of an LTM timer;
time between a moment at which the terminal receives LTM configuration information and a moment at which execution of LTM fails;
time between a moment at which the terminal fails in performing LTM and a moment at which the first information is sent to the network device;
reference configuration information;
configuration information of an LTM candidate cell;
candidate cell execution configuration information.

In some embodiments, the related information of LTM recovery failure includes one or more of the following:
identification information of an LTM recovery cell;
third indication information, configured to indicate whether the terminal obtains a TA value of the LTM recovery cell;
a TA value of the LTM recovery cell determined by the terminal;
fourth indication information, configured to indicate whether an LTM recovery process is a RACH process or a non-RACH process;
fifth indication information, configured to indicate whether the terminal is downlink synchronized with the LTM recovery cell;
CG configuration information of the LTM recovery cell;
reference configuration information;
configuration information of the LTM recovery cell;
identification information of a cell in which RLF occurs.

In some embodiments, the time-related information of occurrence of failure includes one or more of the following:
time between a moment at which the terminal receives LTM configuration information and a moment at which RLF occurs;
time between a moment at which the terminal receives LTM configuration information and a moment at which failure in performing legacy handover occurs;
time between a moment at which the terminal receives LTM configuration information and a moment at which the first information is sent to the network device;
time between a moment at which RLF occurs in the terminal and a moment at which the first information is sent to the network device;
time between a moment at which failure in performing legacy handover occurs in the terminal and a moment at which the first information is sent to the network device.

In some embodiments, the information of LTM cell switch includes one or more of the following:
TCI state identification information;
target configuration identification information;
a TA value of a target cell;
CFRA resource information.

In some embodiments, the first information is recorded in one report, and/or the first information is recorded in different reports, and different reports have an association relationship therebetween.

In some embodiments, different reports are associated through one or more of the following:
parameters in different reports;
indication information in reports;
timestamps;
identification information of the terminal.

In some embodiments, the apparatus further includes:
a third sending unit, configured to send a request message to the terminal.

In some embodiments, the apparatus further includes:
a third receiving unit, configured to receive sixth indication information sent by the terminal, wherein the sixth indication information is used for indicating that the terminal stores the first information.

In some embodiments, the apparatus further includes:
a processing unit, configured to perform LTM mobility optimization according to the first information; and/or, send the first information to a first node, wherein the first information is used for the first node to perform LTM mobility optimization according to the first information.

It should be noted herein that the above apparatus provided in the embodiments of the present disclosure can implement all method steps implemented by the above method embodiments applied to the network device, and can achieve the same technical effects. Details are not described herein again for parts the same as those in the method embodiments and beneficial effects in the present embodiment.

It should be noted that division of units in the embodiments of the present disclosure is schematic, and is merely a logical function division. In actual implementation, another division manner may be used. In addition, the functional units in the embodiments of the present disclosure may be integrated into one processing unit, may physically exist independently, or two or more units may be integrated into one unit. The above integrated units may be implemented in the form of hardware, or may be implemented in the form of software functional units.

If the integrated units are implemented in the form of software functional units and sold or used as an independent product, the integrated units may be stored in a processor-readable storage medium. Based on such understanding, the technical solutions of the present disclosure, in essence, or the part contributing to the related art, or all or part of the technical solutions, may be embodied in the form of a software product, and the computer software product is stored in a storage medium and includes a plurality of instructions for causing a computer device (which may be a personal computer, a server, or a network device, etc.) or a processor to perform all or part of the steps of the methods described in the embodiments of the present disclosure. The foregoing storage medium includes: a USB flash disk, a removable hard disk, a Read-Only Memory (ROM), a Random Access Memory (RAM), a magnetic disk, an optical disc, and various other media capable of storing program codes.

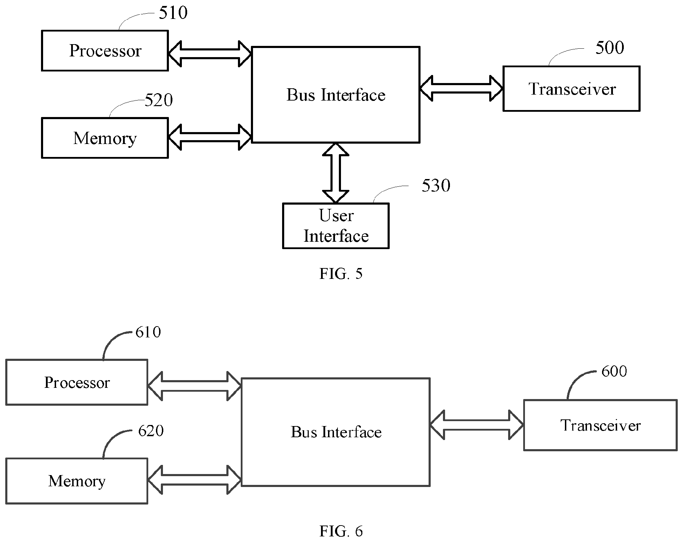

As shown in FIG. 5, an embodiment of the present disclosure further provides a terminal, including: a memory 520, a transceiver 500, and a processor 510; wherein the memory 520 is configured to store a computer program; the transceiver 500 is configured to receive and send data under control of the processor 510; and the processor 510 is configured to read the computer program in the memory and perform the following operations:
in a case that mobility LTM configuration information triggered by Layer 1 and/or Layer 2 is configured, if failure occurs, recording first information, wherein the first information is failure information related to LTM;
sending the first information to a network device.

In some embodiments, the processor is configured to read the computer program in the memory and perform one or more of the following operations:
in a case that a terminal is configured with mobility LTM configuration information triggered by Layer 1 and/or Layer 2, if a single failure occurs, recording the first information;
in a case that a terminal is configured with mobility LTM configuration information triggered by Layer 1 and/or Layer 2, if consecutive failures occur, recording the first information, wherein the consecutive failures include at least two failures.

In some embodiments, the single failure includes one of the following:
failure in performing LTM;
occurrence of RLF in a source cell;
failure in performing legacy handover.

In some embodiments, the consecutive failures include one of the following:
failure in performing LTM, and failure in recovery through LTM;
occurrence of RLF in a source cell, and failure in recovery through LTM;
failure in performing legacy handover, and failure in recovery through LTM;
failure in performing LTM, success in recovery through LTM, and occurrence of RLF within first time after access to a target cell;
occurrence of RLF in a source cell, success in recovery through LTM, and occurrence of RLF within second time after access to a target cell;
failure in performing legacy handover, success in recovery through LTM, and occurrence of RLF within third time after access to a target cell.

In some embodiments, the first information includes one or more of the following:
related information of execution of LTM failure;
related information of LTM recovery failure;
time-related information of occurrence of failure;
indication information indicating whether subsequent LTM is supported.

In some embodiments, the related information of execution of LTM failure includes one or more of the following:
first indication information, configured to indicate an LTM execution type;
information of LTM cell switch;
identification information of an LTM candidate cell;
layer 1 measurement result information of an LTM candidate cell;
layer 1 measurement configuration information of an LTM candidate cell;
information of TCI state activated in advance;
second indication information, configured to indicate that an execution mode of LTM is RACH or non-RACH;
a TA value of a target cell determined by the terminal;
CG configuration information of the target cell;
a value of an LTM timer;
time between a moment at which the terminal receives LTM configuration information and a moment at which execution of LTM fails;
time between a moment at which the terminal fails in performing LTM and a moment at which the first information is sent to the network device;
reference configuration information;
configuration information of an LTM candidate cell;
candidate cell execution configuration information.

In some embodiments, the related information of LTM recovery failure includes one or more of the following:
identification information of an LTM recovery cell;
third indication information, configured to indicate whether the terminal obtains a TA value of the LTM recovery cell;
a TA value of the LTM recovery cell determined by the terminal;
fourth indication information, configured to indicate whether an LTM recovery process is a RACH process or a non-RACH process;
fifth indication information, configured to indicate whether the terminal is downlink synchronized with the LTM recovery cell;
CG configuration information of the LTM recovery cell;
reference configuration information;
configuration information of the LTM recovery cell;
identification information of a cell in which RLF occurs.

In some embodiments, the time-related information of occurrence of failure includes one or more of the following:
time between a moment at which the terminal receives LTM configuration information and a moment at which RLF occurs;
time between a moment at which the terminal receives LTM configuration information and a moment at which failure in performing legacy handover occurs;
time between a moment at which the terminal receives LTM configuration information and a moment at which the first information is sent to the network device;
time between a moment at which RLF occurs in the terminal and a moment at which the first information is sent to the network device;
time between a moment at which failure in performing legacy handover occurs in the terminal and a moment at which the first information is sent to the network device.

In some embodiments, the information of LTM cell switch includes one or more of the following:
TCI state identification information;
target configuration identification information;
a TA value of a target cell;
CFRA resource information.

In some embodiments, the processor is configured to read the computer program in the memory and perform one or more of the following operations:
recording the first information in one report;
recording the first information in different reports, and establishing an association relationship among the different reports.

In some embodiments, the processor is configured to read the computer program in the memory and perform one or more of the following operations:
establishing an association relationship among different reports through parameters in different reports;
setting indication information in reports, and establishing an association relationship among different reports through the indication information;
establishing an association relationship among different reports through timestamps;
establishing an association relationship among different reports through identification information of the terminal.

In some embodiments, the processor is configured to read the computer program in the memory and perform the following operations:
receiving a request message sent by the network device;
the sending the first information to the network device includes:
   sending the first information to the network device according to the request message.

In some embodiments, the processor is configured to read the computer program in the memory and perform the following operations:
sending sixth indication information to the network device, wherein the sixth indication information is used for indicating that the terminal stores the first information.

Wherein, in FIG. 5, a bus architecture may include any number of interconnected buses and bridges, and specifically links together various circuits of one or more processors represented by the processor 510 and a memory represented by the memory 520. The bus architecture may also link together various other circuits, such as peripheral devices, voltage regulators, and power management circuits, which are all well known in the art, and therefore, further description thereof is omitted herein. A bus interface provides an interface. The transceiver 500 may be a plurality of elements, that is, including a transmitter and a transceiver, and provides means for communicating with various other devices over a transmission medium. For different user equipment, the user interface 530 may also be an interface capable of externally or internally connecting required devices, and the connected devices include, but are not limited to, a keypad, a display, a speaker, a microphone, a joystick, and the like.

The processor 510 is responsible for managing the bus architecture and general processing, and the memory 520 may store data used by the processor 510 when performing operations.

In some embodiments, the processor 510 may be a CPU, an ASIC, an FPGA, or a CPLD, and the processor may also adopt a multi-core architecture.

By calling the computer program stored in the memory, the processor is configured to execute any one of the methods provided in the embodiments of the present disclosure according to obtained executable instructions. The processor and the memory may also be physically arranged separately.

It should be noted herein that the above terminal provided in the embodiments of the present disclosure can implement all method steps implemented by the above method embodiments applied to the terminal, and can achieve the same technical effects. Details are not described herein again for parts the same as those in the method embodiments and beneficial effects in the present embodiment.

As shown in FIG. 6, an embodiment of the present disclosure further provides a network device, including: a memory 620, a transceiver 600, and a processor 610; wherein the memory 620 is configured to store a computer program; the transceiver 600 is configured to receive and send data under control of the processor 610; and the processor 610 is configured to read the computer program in the memory and perform the following operations:
receiving first information sent by a terminal, wherein the first information is recorded when the terminal is configured with LTM configuration information and undergoes failure; and the first information is failure information related to LTM.

In some embodiments, the failure includes a single failure and/or consecutive failures, and the consecutive failures include at least two failures.

In some embodiments, the single failure includes one of the following:
failure in performing LTM;
occurrence of RLF in a source cell;
failure in performing legacy handover.

In some embodiments, the consecutive failures include one of the following:
failure in performing LTM, and failure in recovery through LTM;
occurrence of RLF in a source cell, and failure in recovery through LTM;
failure in performing legacy handover, and failure in recovery through LTM;
failure in performing LTM, success in recovery through LTM, and occurrence of RLF within first time after access to a target cell;
occurrence of RLF in a source cell, success in recovery through LTM, and occurrence of RLF within second time after access to a target cell;
failure in performing legacy handover, success in recovery through LTM, and occurrence of RLF within third time after access to a target cell.

In some embodiments, the first information includes one or more of the following:
related information of execution of LTM failure;
related information of LTM recovery failure;
time-related information of occurrence of failure;
indication information indicating whether subsequent LTM is supported.

In some embodiments, the related information of execution of LTM failure includes one or more of the following:
first indication information, configured to indicate an LTM execution type;
information of LTM cell switch;
identification information of an LTM candidate cell;
layer 1 measurement result information of an LTM candidate cell;
layer 1 measurement configuration information of an LTM candidate cell;
information of TCI state activated in advance;
second indication information, configured to indicate that an execution mode of LTM is RACH or non-RACH;
a TA value of a target cell determined by the terminal;
CG configuration information of the target cell;
a value of an LTM timer;
time between a moment at which the terminal receives LTM configuration information and a moment at which execution of LTM fails;
time between a moment at which the terminal fails in performing LTM and a moment at which the first information is sent to the network device;
reference configuration information;
configuration information of an LTM candidate cell;
candidate cell execution configuration information.

In some embodiments, the related information of LTM recovery failure includes one or more of the following:
identification information of an LTM recovery cell;
third indication information, configured to indicate whether the terminal obtains a TA value of the LTM recovery cell;
a TA value of the LTM recovery cell determined by the terminal;
fourth indication information, configured to indicate whether an LTM recovery process is a RACH process or a non-RACH process;
fifth indication information, configured to indicate whether the terminal is downlink synchronized with the LTM recovery cell;
CG configuration information of the LTM recovery cell;
reference configuration information;
configuration information of the LTM recovery cell;
identification information of a cell in which RLF occurs.

In some embodiments, the time-related information of occurrence of failure includes one or more of the following:
time between a moment at which the terminal receives LTM configuration information and a moment at which RLF occurs;
time between a moment at which the terminal receives LTM configuration information and a moment at which failure in performing legacy handover occurs;
time between a moment at which the terminal receives LTM configuration information and a moment at which the first information is sent to the network device;
time between a moment at which RLF occurs in the terminal and a moment at which the first information is sent to the network device;
time between a moment at which failure in performing legacy handover occurs in the terminal and a moment at which the first information is sent to the network device.

In some embodiments, the information of LTM cell switch includes one or more of the following:
TCI state identification information;
target configuration identification information;
a TA value of a target cell;
CFRA resource information.

In some embodiments, the first information is recorded in one report, and/or the first information is recorded in different reports, and different reports have an association relationship therebetween.

In some embodiments, different reports are associated through one or more of the following:
parameters in different reports;
indication information in reports;
timestamps;
identification information of the terminal.

In some embodiments, the processor is configured to read the computer program in the memory and perform the following operations:
sending a request message to the terminal.

In some embodiments, the processor is configured to read the computer program in the memory and perform the following operations:
receiving sixth indication information sent by the terminal, wherein the sixth indication information is used for indicating that the terminal stores the first information.

In some embodiments, the processor is configured to read the computer program in the memory and perform the following operations:
performing LTM mobility optimization according to the first information; and/or, sending the first information to a first node, wherein the first information is used for the first node to perform LTM mobility optimization according to the first information.

Wherein, in FIG. 6, a bus architecture may include any number of interconnected buses and bridges, and specifically links together various circuits of one or more processors represented by the processor 610 and a memory represented by the memory 620. The bus architecture may also link together various other circuits, such as peripheral devices, voltage regulators, and power management circuits, which are all well known in the art, and therefore, further description thereof is omitted herein. A bus interface provides an interface. The transceiver 600 may be a plurality of elements, that is, including a transmitter and a transceiver, and provides means for communicating with various other devices over a transmission medium. The processor 610 is responsible for managing the bus architecture and general processing, and the memory 620 may store data used by the processor 610 when performing operations.

The processor 610 may be a CPU, an ASIC, an FPGA, or a CPLD, and the processor may also adopt a multi-core architecture.

It should be noted herein that the above network device provided in the embodiments of the present disclosure can implement all method steps implemented by the above method embodiments applied to the network device, and can achieve the same technical effects. Details are not described herein again for parts the same as those in the method embodiments and beneficial effects in the present embodiment.

In addition, the specific embodiments of the present disclosure further provide a processor-readable storage medium, on which a computer program is stored, wherein when the program is executed by a processor, the steps of the above mobility failure processing method are implemented, and the same technical effects can be achieved. To avoid repetition, details are not described herein again. Wherein, the readable storage medium may be any available medium or data storage device that can be accessed by the processor, including but not limited to a magnetic memory (for example, a floppy disk, a hard disk, a magnetic tape, a magneto-optical disk (MO), and the like), an optical memory (for example, a CD, a DVD, a Blu-ray Disc (BD), a High-Definition Versatile Disc (HVD), and the like), and a semiconductor memory (for example, a ROM, an EPROM, an EEPROM, a NAND FLASH, an SSD, and the like).

It should be noted that the technical solutions provided in the embodiments of the present disclosure may be applicable to various systems, and in particular to a 5G system. For example, applicable systems may be a GSM system, a CDMA system, a WCDMA GPRS system, an LTE system, an LTE FDD system, an LTE TDD system, an LTE-A system, a UMTS, a WiMAX system, a 5G NR system, and the like. Each of the various systems includes terminal equipment and network equipment. The system may further include a core network part, for example, an EPS, a 5GS, and the like.

The terminal equipment involved in the embodiments of the present disclosure may be equipment providing a user with voice and/or data connectivity, handheld equipment having a wireless connection function, or other processing equipment connected to a wireless modem, and the like. In different systems, names of the terminal equipment may also be different. For example, in a 5G system, the terminal equipment may be referred to as UE. The wireless terminal equipment may communicate with one or more CNs through a RAN, and the wireless terminal equipment may be mobile terminal equipment, such as a mobile phone (or a "cellular" phone) and a computer having mobile terminal equipment. For example, the wireless terminal equipment may be a portable, pocket-sized, handheld, computer-built-in, or vehicle-mounted mobile apparatus that exchanges voice and/or data with the RAN. For example, the wireless terminal equipment may be devices such as a PCS phone, a cordless phone, a SIP phone, a WLL station, a PDA, and the like. The wireless terminal equipment may also be referred to as a system, a subscriber unit, a subscriber station, a mobile station, a mobile, a remote station, an access point, a remote terminal equipment, an access terminal equipment, a user terminal equipment, a user agent, or a user device, which is not limited in the embodiments of the present disclosure.

The network device involved in the embodiments of the present disclosure may be a base station, and the base station may include a plurality of cells providing services for terminals. According to different specific application scenarios, the base station may also be referred to as an access point, or may be equipment in an access network that communicates with wireless terminal equipment through one or more sectors on an air interface, or may have other names. The network device may be used for exchanging received air frames with IP packets, and serves as a router between the wireless terminal equipment and the rest of the access network, wherein the rest of the access network may include an IP communication network. The network device may also coordinate management of attributes of the air interface. For example, the network device involved in the embodiments of the present disclosure may be a BTS in GSM or CDMA, may also be a NodeB in WCDMA, may further be an eNB or e-NodeB in an LTE system, a gNB in a 5G network architecture (next generation system), or may also be a HeNB, a relay node, a femto, a pico, and the like, which is not limited in the embodiments of the present disclosure. In some network structures, the network device may include a CU node and a DU node, and the CU and the DU may also be geographically separated.

One or more antennas may each be used between the network device and the terminal equipment for MIMO transmission, and the MIMO transmission may be SU-MIMO or MU-MIMO. According to forms and numbers of antenna combinations, the MIMO transmission may be 2D-MIMO, 3D-MIMO, FD-MIMO, or massive-MIMO, and may also be diversity transmission, precoding transmission, beamforming transmission, and the like.

Those skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may take the form of a computer program product implemented on one or more computer-usable storage media containing computer-usable program codes therein (including but not limited to disk memories, optical memories, and the like).

The present disclosure is described with reference to flowcharts and/or block diagrams according to methods, devices (systems), and computer program products of the embodiments of the present disclosure. It should be understood that each process and/or block in the flowcharts and/or block diagrams, and combinations of processes and/or blocks in the flowcharts and/or block diagrams, may be implemented by computer-executable instructions. These computer-executable instructions may be provided to a processor of a general-purpose computer, a special-purpose computer, an embedded processor, or another programmable data processing device to produce a machine, such that instructions executed by the processor of the computer or other programmable data processing device produce an apparatus for implementing functions specified in one or more processes in the flowcharts and/or one or more blocks in the block diagrams.

These processor-executable instructions may also be stored in a processor-readable memory capable of directing a computer or another programmable data processing device to work in a particular manner, such that the instructions stored in the processor-readable memory produce an article of manufacture including an instruction apparatus, and the instruction apparatus implements functions specified in one or more processes in the flowcharts and/or one or more blocks in the block diagrams.

These processor-executable instructions may also be loaded onto a computer or another programmable data processing device, such that a series of operation steps are executed on the computer or other programmable device to produce computer-implemented processing, thereby providing, by instructions executed on the computer or other programmable device, steps for implementing functions specified in one or more processes in the flowcharts and/or one or more blocks in the block diagrams.

In addition, it should be pointed out that, in the apparatuses and methods of the present disclosure, it is apparent that the respective components or steps may be decomposed and/or recombined. Such decomposition and/or recombination shall be regarded as equivalent solutions of the present disclosure. In addition, the steps for executing the above series of processing may naturally be executed in chronological order according to the described sequence, but are not necessarily required to be executed in chronological order, and some steps may be executed in parallel or independently of one another. Those of ordinary skill in the art can understand that all or any steps or components of the methods and apparatuses of the present disclosure may be implemented, in any computing device (including a processor, a storage medium, and the like) or a network of computing devices, by hardware, firmware, software, or a combination thereof, which can be achieved by those of ordinary skill in the art by using their basic programming skills after reading the description of the present disclosure.

It should be noted that the division of the above modules is merely a logical function division, and in actual implementation, all or part of the modules may be integrated into one physical entity, or may be physically separated. Further, all of the modules may be implemented in the form of software invoked by a processing element; or may all be implemented in the form of hardware; or part of the modules may be implemented in the form of software invoked by a processing element, and part of the modules may be implemented in the form of hardware. For example, a certain module may be a separately provided processing element, or may be integrated into a certain chip of the above apparatus for implementation. In addition, the module may also be stored in the memory of the above apparatus in the form of program code, and be invoked by a certain processing element of the above apparatus to execute functions of the above module. Implementations of other modules are similar thereto. In addition, all or part of the modules may be integrated together, or may be independently implemented. The processing element described herein may be an integrated circuit having signal processing capability. In the implementation process, the steps of the above method or the above modules may be completed by an integrated logic circuit in hardware in a processor element or by instructions in software form.

For example, each module, unit, subunit, or submodule may be one or more integrated circuits configured to implement the above method, for example: one or more ASICs, or one or more DSPs, or one or more FPGAs, and the like. As another example, when one of the above modules is implemented in the form of program code scheduled by a processing element, the processing element may be a general-purpose processor, such as a CPU or another processor capable of invoking program code. As another example, the modules may be integrated together and implemented in the form of an SOC.

The terms "first", "second", and the like in the specification and claims of the present disclosure are used for distinguishing similar objects, and are not necessarily used for describing a specific sequence or order. It should be understood that data used in such a manner may be interchangeable under appropriate circumstances, so that the embodiments of the present disclosure described herein may be implemented in sequences other than those illustrated or described herein. In addition, the terms "include", "comprise", and any variations thereof are intended to cover non-exclusive inclusion. For example, a process, method, system, product, or device including a series of steps or units is not necessarily limited to those steps or units clearly listed, but may include other steps or units that are not clearly listed or are inherent to the process, method, product, or device. In addition, "and/or" used in the specification and claims indicates one or more of connected objects. For example, A and/or B and/or C indicates seven cases: A alone, B alone, C alone, both A and B existing, both B and C existing, both A and C existing, and A, B, and C all existing. Similarly, "one or more of A and B" used in the specification and claims should be understood as "A alone, B alone, or both A and B existing".

Obviously, those skilled in the art may make various modifications and variations to the present disclosure without departing from the spirit and scope of the present disclosure. Thus, provided that such modifications and variations of the present disclosure fall within the scope of the claims of the present disclosure and equivalent technologies thereof, the present disclosure is also intended to include such modifications and variations.

## Claims

1. A mobility failure handling method, comprising:
recording, by a terminal, first information in response to a failure occurring when the terminal is configured with Layer 1 and/or Layer 2-triggered mobility LTM configuration information, wherein the first information is LTM-related failure information;
transmitting, by the terminal, the first information to a network device.

2. The method according to claim 1, wherein the recording, by the terminal, first information in response to a failure occurring when the terminal is configured with Layer 1 and/or Layer 2-triggered mobility LTM configuration information comprises one or more of the following:
recording, by the terminal, the first information in response to a single failure occurring when the terminal is configured with Layer 1 and/or Layer 2-triggered mobility LTM configuration information;
recording, by the terminal, the first information in response to consecutive failures occurring when the terminal is configured with Layer 1 and/or Layer 2-triggered mobility LTM configuration information, wherein the consecutive failures comprise at least two failures.

3. The method according to claim 2, wherein the single failure comprises one of the following:
a failure in performing LTM;
a RLF occurring in a source cell;
a failure in performing a legacy handover.

4. The method according to claim 2, wherein the consecutive failures comprise one of the following:
a failure in performing LTM, and a failure in recovery through LTM;
an RLF occurring in a source cell, and a failure in recovery through LTM;
a failure in performing a legacy handover, and a failure in recovery through LTM;
a failure in performing LTM, successful recovery through LTM, and an RLF occurring within first time after accessing a target cell;
an RLF occurring in a source cell, successful recovery through LTM, and an RLF occurring within second time after accessing a target cell;
a failure in performing a legacy handover, successful recovery through LTM, and an RLF occurring within third time after accessing a target cell.

5. The method according to claim 1, wherein the first information comprises one or more of the following:
related information of a failure in performing LTM;
related information of a failure in recovery through LTM;
time-related information of occurrence of the failure;
indication information indicating whether subsequent LTM is supported.

6. The method according to claim 5, wherein the related information of the failure in performing LTM comprises one or more of the following:
first indication information, used to indicate an LTM execution type;
information of LTM cell switch;
identifier information of an LTM candidate cell;
Layer 1 measurement result information of the LTM candidate cell;
Layer 1 measurement configuration information of the LTM candidate cell;
information of a TCI state activated in advance;
second indication information, used to indicate whether an execution mode of LTM is a RACH mode or a non-RACH mode;
a TA value of a target cell determined by the terminal;
CG configuration information of the target cell;
a value of an LTM timer;
time between a moment at which the terminal receives LTM configuration information and a moment at which the failure in performing LTM occurs;
time between a moment at which the failure in performing LTM occurs and a moment at which the terminal transmits the first information to the network device;
reference configuration information;
configuration information of the LTM candidate cell;
candidate cell execution configuration information.

7. The method according to claim 5, wherein the related information of the failure in recovery through LTM comprises one or more of the following:
identifier information of an LTM recovery cell;
third indication information, used to indicate whether the terminal obtains a TA value of the LTM recovery cell;
a TA value of the LTM recovery cell determined by the terminal;
fourth indication information, used to indicate whether an LTM recovery procedure is a RACH procedure or a non-RACH procedure;
fifth indication information, used to indicate whether the terminal is downlink-synchronized with the LTM recovery cell;
CG configuration information of the LTM recovery cell;
reference configuration information;
configuration information of the LTM recovery cell;
identifier information of a cell in which a radio link failure occurs.

8. The method according to claim 5, wherein the time-related information of occurrence of the failure comprises one or more of the following:
time between a moment at which the terminal receives LTM configuration information and a moment at which an RLF occurs;
time between a moment at which the terminal receives LTM configuration information and a moment at which a legacy handover failure occurs;
time between a moment at which the terminal receives LTM configuration information and a moment at which the terminal transmits the first information to the network device;
time between a moment at which an RLF occurs in the terminal and a moment at which the terminal transmits the first information to the network device;
time between a moment at which a legacy handover failure occurs in the terminal and a moment at which the terminal transmits the first information to the network device.

9. The method according to claim 6, wherein the information of the LTM cell switch comprises one or more of the following:
TCI state identifier information;
target configuration identifier information;
a TA value of a target cell;
CFRA resource information.

10. The method according to claim 1, wherein recording the first information comprises one or more of the following:
recording the first information in one report;
recording the first information in different reports, and establishing an association relationship among the different reports.

11. The method according to claim 10, wherein establishing an association relationship among the different reports comprises one or more of the following:
establishing the association relationship among the different reports through parameters in the different reports;
setting indication information in a report, and establishing the association relationship among the different reports through the indication information;
establishing the association relationship among the different reports through a timestamp;
establishing the association relationship among the different reports through identifier information of the terminal.

12. The method according to claim 1, wherein the method further comprises:
receiving a request message transmitted by the network device;
wherein the transmitting, by the terminal, the first information to the network device comprises:
transmitting, according to the request message, the first information to the network device.

13. The method according to claim 12, wherein before receiving the request message transmitted by the network device, the method further comprises:
transmitting sixth indication information to the network device, wherein the sixth indication information is used to indicate that the terminal stores the first information.

14. A mobility failure handling method, comprising:
receiving, by a network device, first information transmitted by a terminal, wherein the first information is recorded in a case that the terminal is configured with LTM configuration information and a failure occurs, and wherein the first information is LTM-related failure information.

15. The method according to claim 14, wherein the failure comprises a single failure and/or consecutive failures, and the consecutive failures comprise at least two failures.

16. The method according to claim 15, wherein the single failure comprises one of the following:
a failure in performing LTM;
an RLF occurring in a source cell;
a failure in performing a legacy handover.

17. The method according to claim 15, wherein the consecutive failures comprise one of the following:
a failure in performing LTM, and a failure in recovery through LTM;
an RLF occurring in a source cell, and a failure in recovery through LTM;
a failure in performing a legacy handover, and a failure in recovery through LTM;
a failure in performing LTM, successful recovery through LTM, and an RLF occurring within first time after accessing a target cell;
an RLF occurring in a source cell, successful recovery through LTM, and an RLF occurring within second time after accessing a target cell;
a failure in performing a legacy handover, successful recovery through LTM, and an RLF occurring within third time after accessing a target cell.

18. The method according to claim 14, wherein the first information comprises one or more of the following:
related information of a failure in performing LTM;
related information of a failure in recovery through LTM;
time-related information of occurrence of the failure;
indication information indicating whether subsequent LTM is supported.

19. The method according to claim 18, wherein the related information of the failure in performing LTM comprises one or more of the following:
first indication information, used to indicate an LTM execution type;
information of LTM cell switch;
identifier information of an LTM candidate cell;
Layer 1 measurement result information of the LTM candidate cell;
Layer 1 measurement configuration information of the LTM candidate cell;
information of a TCI state activated in advance;
second indication information, used to indicate whether an execution mode of LTM is a RACH mode or a non-RACH mode;
a TA value of a target cell determined by the terminal;
CG configuration information of the target cell;
a value of an LTM timer;
time between a moment at which the terminal receives LTM configuration information and a moment at which the failure in performing LTM occurs;
time between a moment at which the failure in performing LTM occurs and a moment at which the terminal transmits the first information to the network device;
reference configuration information;
configuration information of the LTM candidate cell;
candidate cell execution configuration information.

20. The method according to claim 18, wherein the related information of the failure in recovery through LTM comprises one or more of the following:
identifier information of an LTM recovery cell;
third indication information, used to indicate whether the terminal obtains a TA value of the LTM recovery cell;
a TA value of the LTM recovery cell determined by the terminal;
fourth indication information, used to indicate whether an LTM recovery procedure is a RACH procedure or a non-RACH procedure;
fifth indication information, used to indicate whether the terminal is downlink-synchronized with the LTM recovery cell;
CG configuration information of the LTM recovery cell;
reference configuration information;
configuration information of the LTM recovery cell;
identifier information of a cell in which a radio link failure occurs.

21. The method according to claim 18, wherein the time-related information of occurrence of the failure comprises one or more of the following:
time between a moment at which the terminal receives LTM configuration information and a moment at which an RLF occurs;
time between a moment at which the terminal receives LTM configuration information and a moment at which a legacy handover failure occurs;
time between a moment at which the terminal receives LTM configuration information and a moment at which the terminal transmits the first information to the network device;
time between a moment at which an RLF occurs in the terminal and a moment at which the terminal transmits the first information to the network device;
time between a moment at which a legacy handover failure occurs in the terminal and a moment at which the terminal transmits the first information to the network device.

22. The method according to claim 19, wherein the information of the LTM cell switch comprises one or more of the following:
TCI state identifier information;
target configuration identifier information;
a TA value of a target cell;
CFRA resource information.

23. The method according to claim 14, wherein the first information is recorded in one report, and/or the first information is recorded in different reports, and the different reports have an association relationship therebetween.

24. The method according to claim 23, wherein the different reports are associated through one or more of the following:
parameters in the different reports;
indication information in a report;
a timestamp;
identifier information of the terminal.

25. The method according to claim 14, wherein before receiving the first information transmitted by the terminal, the method further comprises:
transmitting a request message to the terminal.

26. The method according to claim 25, wherein before transmitting the request message to the terminal, the method further comprises:
receiving sixth indication information transmitted by the terminal, wherein the sixth indication information is used to indicate that the terminal stores the first information.

27. The method according to claim 14, wherein the method further comprises:
performing LTM mobility optimization according to the first information; and/or
transmitting the first information to a first node, wherein the first information is used by the first node to perform LTM mobility optimization according to the first information.

28. A terminal, comprising: a memory, a transceiver, and a processor, wherein: the memory is configured to store a computer program; the transceiver is configured to receive and transmit data under control of the processor; and the processor is configured to read the computer program in the memory and perform the following operations:
recording first information in response to a failure occurring when the terminal is configured with Layer 1 and/or Layer 2-triggered mobility LTM configuration information, wherein the first information is LTM-related failure information;
transmitting the first information to a network device.

29. The terminal according to claim 28, wherein the processor is configured to read the computer program in the memory and perform one or more of the following operations:
recording the first information in response to a single failure occurring when the terminal is configured with Layer 1 and/or Layer 2-triggered mobility LTM configuration information;
recording the first information in response to consecutive failures occurring when the terminal is configured with Layer 1 and/or Layer 2-triggered mobility LTM configuration information, wherein the consecutive failures comprise at least two failures.

30. The terminal according to claim 29, wherein the single failure comprises one of the following:
a failure in performing LTM;
a RLF occurring in a source cell;
a failure in performing a legacy handover.

31. The terminal according to claim 29, wherein the consecutive failures comprise one of the following:
a failure in performing LTM, and a failure in recovery through LTM;
an RLF occurring in a source cell, and a failure in recovery through LTM;
a failure in performing a legacy handover, and a failure in recovery through LTM;
a failure in performing LTM, successful recovery through LTM, and an RLF occurring within first time after accessing a target cell;
an RLF occurring in a source cell, successful recovery through LTM, and an RLF occurring within second time after accessing a target cell;
a failure in performing a legacy handover, successful recovery through LTM, and an RLF occurring within third time after accessing a target cell.

32. The terminal according to claim 28, wherein the first information comprises one or more of the following:
related information of a failure in performing LTM;
related information of a failure in recovery through LTM;
time-related information of occurrence of the failure;
indication information indicating whether subsequent LTM is supported.

33. The terminal according to claim 32, wherein the related information of the failure in performing LTM comprises one or more of the following:
first indication information, used to indicate an LTM execution type;
information of LTM cell switch;
identifier information of an LTM candidate cell;
Layer 1 measurement result information of the LTM candidate cell;
Layer 1 measurement configuration information of the LTM candidate cell;
information of a TCI state activated in advance;
second indication information, used to indicate whether an execution mode of LTM is a RACH mode or a non-RACH mode;
a TA value of a target cell determined by the terminal;
CG configuration information of the target cell;
a value of an LTM timer;
time between a moment at which the terminal receives LTM configuration information and a moment at which the failure in performing LTM occurs;
time between a moment at which the failure in performing LTM occurs and a moment at which the terminal transmits the first information to the network device;
reference configuration information;
configuration information of the LTM candidate cell;
candidate cell execution configuration information.

34. The terminal according to claim 32, wherein the related information of the failure in recovery through LTM comprises one or more of the following:
identifier information of an LTM recovery cell;
third indication information, used to indicate whether the terminal obtains a TA value of the LTM recovery cell;
a TA value of the LTM recovery cell determined by the terminal;
fourth indication information, used to indicate whether an LTM recovery procedure is a RACH procedure or a non-RACH procedure;
fifth indication information, used to indicate whether the terminal is downlink-synchronized with the LTM recovery cell;
CG configuration information of the LTM recovery cell;
reference configuration information;
configuration information of the LTM recovery cell;
identifier information of a cell in which a radio link failure occurs.

35. The terminal according to claim 32, wherein the time-related information of occurrence of the failure comprises one or more of the following:
time between a moment at which the terminal receives LTM configuration information and a moment at which an RLF occurs;
time between a moment at which the terminal receives LTM configuration information and a moment at which a legacy handover failure occurs;
time between a moment at which the terminal receives LTM configuration information and a moment at which the terminal transmits the first information to the network device;
time between a moment at which an RLF occurs in the terminal and a moment at which the terminal transmits the first information to the network device;
time between a moment at which a legacy handover failure occurs in the terminal and a moment at which the terminal transmits the first information to the network device.

36. The terminal according to claim 33, wherein the information of the LTM cell switch comprises one or more of the following:
TCI state identifier information;
target configuration identifier information;
a TA value of a target cell;
CFRA resource information.

37. The terminal according to claim 28, wherein the processor is used to read the computer program in the memory and perform one or more of the following operations:
recording the first information in one report;
recording the first information in different reports, and establishing an association relationship among the different reports.

38. The terminal according to claim 37, wherein the processor is used to read the computer program in the memory and perform one or more of the following operations:
establishing the association relationship among the different reports through parameters in the different reports;
setting indication information in a report, and establishing the association relationship among the different reports through the indication information;
establishing the association relationship among the different reports through a timestamp;
establishing the association relationship among the different reports through identifier information of the terminal.

39. The terminal according to claim 28, wherein the processor is used to read the computer program in the memory and perform the following operations:
receiving a request message transmitted by the network device;
wherein the transmitting the first information to the network device comprises:
transmitting, according to the request message, the first information to the network device.

40. The terminal according to claim 39, wherein the processor is used to read the computer program in the memory and perform the following operations:
transmitting sixth indication information to the network device, wherein the sixth indication information is used to indicate that the terminal stores the first information.

41. A network device, comprising: a memory, a transceiver, and a processor, wherein:
the memory is configured to store a computer program; the transceiver is configured to receive and transmit data under control of the processor; and the processor is configured to read the computer program stored in the memory and perform the following operation:
receiving first information transmitted by a terminal, wherein the first information is recorded in a case that the terminal is configured with LTM configuration information and a failure occurs, and wherein the first information is LTM-related failure information.

42. The network device according to claim 41, wherein the failure comprises a single failure and/or consecutive failures, and the consecutive failures comprise at least two failures.

43. The network device according to claim 42, wherein the single failure comprises one of the following:
a failure in performing LTM;
an RLF occurring in a source cell;
a failure in performing a legacy handover.

44. The network device according to claim 42, wherein the consecutive failures comprise one of the following:
a failure in performing LTM, and a failure in recovery through LTM;
an RLF occurring in a source cell, and a failure in recovery through LTM;
a failure in performing a legacy handover, and a failure in recovery through LTM;
a failure in performing LTM, successful recovery through LTM, and an RLF occurring within first time after accessing a target cell;
an RLF occurring in a source cell, successful recovery through LTM, and an RLF occurring within second time after accessing a target cell;
a failure in performing a legacy handover, successful recovery through LTM, and an RLF occurring within third time after accessing a target cell.

45. The network device according to claim 41, wherein the first information comprises one or more of the following:
related information of a failure in performing LTM;
related information of a failure in recovery through LTM;
time-related information of occurrence of the failure;
indication information indicating whether subsequent LTM is supported.

46. The network device according to claim 45, wherein the related information of the failure in performing LTM comprises one or more of the following:
first indication information, used to indicate an LTM execution type;
information of LTM cell switch;
identifier information of an LTM candidate cell;
Layer 1 measurement result information of the LTM candidate cell;
Layer 1 measurement configuration information of the LTM candidate cell;
information of a TCI state activated in advance;
second indication information, used to indicate whether an execution mode of LTM is a RACH mode or a non-RACH mode;
a TA value of a target cell determined by the terminal;
CG configuration information of the target cell;
a value of an LTM timer;
time between a moment at which the terminal receives LTM configuration information and a moment at which the failure in performing LTM occurs;
time between a moment at which the failure in performing LTM occurs and a moment at which the terminal transmits the first information to the network device;
reference configuration information;
configuration information of the LTM candidate cell;
candidate cell execution configuration information.

47. The network device according to claim 45, wherein the related information of the failure in recovery through LTM comprises one or more of the following:
identifier information of an LTM recovery cell;
third indication information, used to indicate whether the terminal obtains a TA value of the LTM recovery cell;
a TA value of the LTM recovery cell determined by the terminal;
fourth indication information, used to indicate whether an LTM recovery procedure is a RACH procedure or a non-RACH procedure;
fifth indication information, used to indicate whether the terminal is downlink-synchronized with the LTM recovery cell;
CG configuration information of the LTM recovery cell;
reference configuration information;
configuration information of the LTM recovery cell;
identifier information of a cell in which a radio link failure occurs.

48. The network device according to claim 45, wherein the time-related information of occurrence of the failure comprises one or more of the following:
time between a moment at which the terminal receives LTM configuration information and a moment at which an RLF occurs;
time between a moment at which the terminal receives LTM configuration information and a moment at which a legacy handover failure occurs;
time between a moment at which the terminal receives LTM configuration information and a moment at which the terminal transmits the first information to the network device;
time between a moment at which an RLF occurs in the terminal and a moment at which the terminal transmits the first information to the network device;
time between a moment at which a legacy handover failure occurs in the terminal and a moment at which the terminal transmits the first information to the network device.

49. The network device according to claim 46, wherein the information of the LTM cell switch comprises one or more of the following:
TCI state identifier information;
target configuration identifier information;
a TA value of a target cell;
CFRA resource information.

50. The network device according to claim 41, wherein the first information is recorded in one report, and/or the first information is recorded in different reports, and the different reports have an association relationship therebetween.

51. The network device according to claim 50, wherein the different reports are associated through one or more of the following:
parameters in the different reports;
indication information in a report;
a timestamp;
identifier information of the terminal.

52. The network device according to claim 41, wherein the processor is used to read the computer program in the memory and perform the following operations:
transmitting a request message to the terminal.

53. The network device according to claim 52, wherein the processor is used to read the computer program in the memory and perform the following operations:
receiving sixth indication information transmitted by the terminal, wherein the sixth indication information is used to indicate that the terminal stores the first information.

54. The network device according to claim 41, wherein the processor is used to read the computer program in the memory and perform the following operations:
performing LTM mobility optimization according to the first information; and/or
transmitting the first information to a first node, wherein the first information is used by the first node to perform LTM mobility optimization according to the first information.

55. A mobility failure handling apparatus, comprising:
a recording unit, configured to record first information in response to a failure occurring when a terminal is configured with Layer 1 and/or Layer 2-triggered mobility LTM configuration information, wherein the first information is LTM-related failure information; and
a first transmitting unit, configured to transmit the first information to a network device.

56. The apparatus according to claim 55, wherein the recording unit is configured to implement one or more of the following:
recording the first information in response to a single failure occurring when the terminal is configured with Layer 1 and/or Layer 2-triggered mobility LTM configuration information;
recording the first information in response to consecutive failures occurring when the terminal is configured with Layer 1 and/or Layer 2-triggered mobility LTM configuration information, wherein the consecutive failures comprise at least two failures.

57. The apparatus according to claim 56, wherein the single failure comprises one of the following:
a failure in performing LTM;
a RLF occurring in a source cell;
a failure in performing a legacy handover.

58. The apparatus according to claim 56, wherein the consecutive failures comprise one of the following:
a failure in performing LTM, and a failure in recovery through LTM;
an RLF occurring in a source cell, and a failure in recovery through LTM;
a failure in performing a legacy handover, and a failure in recovery through LTM;
a failure in performing LTM, successful recovery through LTM, and an RLF occurring within first time after accessing a target cell;
an RLF occurring in a source cell, successful recovery through LTM, and an RLF occurring within second time after accessing a target cell;
a failure in performing a legacy handover, successful recovery through LTM, and an RLF occurring within third time after accessing a target cell.

59. The apparatus according to claim 55, wherein the first information comprises one or more of the following:
related information of a failure in performing LTM;
related information of a failure in recovery through LTM;
time-related information of occurrence of the failure;
indication information indicating whether subsequent LTM is supported.

60. The apparatus according to claim 59, wherein the related information of the failure in performing LTM comprises one or more of the following:
first indication information, used to indicate an LTM execution type;
information of LTM cell switch;
identifier information of an LTM candidate cell;
Layer 1 measurement result information of the LTM candidate cell;
Layer 1 measurement configuration information of the LTM candidate cell;
information of a TCI state activated in advance;
second indication information, used to indicate whether an execution mode of LTM is a RACH mode or a non-RACH mode;
a TA value of a target cell determined by the terminal;
CG configuration information of the target cell;
a value of an LTM timer;
time between a moment at which the terminal receives LTM configuration information and a moment at which the failure in performing LTM occurs;
time between a moment at which the failure in performing LTM occurs and a moment at which the terminal transmits the first information to the network device;
reference configuration information;
configuration information of the LTM candidate cell;
candidate cell execution configuration information.

61. The apparatus according to claim 59, wherein the related information of the failure in recovery through LTM comprises one or more of the following:
identifier information of an LTM recovery cell;
third indication information, used to indicate whether the terminal obtains a TA value of the LTM recovery cell;
a TA value of the LTM recovery cell determined by the terminal;
fourth indication information, used to indicate whether an LTM recovery procedure is a RACH procedure or a non-RACH procedure;
fifth indication information, used to indicate whether the terminal is downlink-synchronized with the LTM recovery cell;
CG configuration information of the LTM recovery cell;
reference configuration information;
configuration information of the LTM recovery cell;
identifier information of a cell in which a radio link failure occurs.

62. The apparatus according to claim 59, wherein the time-related information of occurrence of the failure comprises one or more of the following:
time between a moment at which the terminal receives LTM configuration information and a moment at which an RLF occurs;
time between a moment at which the terminal receives LTM configuration information and a moment at which a legacy handover failure occurs;
time between a moment at which the terminal receives LTM configuration information and a moment at which the terminal transmits the first information to the network device;
time between a moment at which an RLF occurs in the terminal and a moment at which the terminal transmits the first information to the network device;
time between a moment at which a legacy handover failure occurs in the terminal and a moment at which the terminal transmits the first information to the network device.

63. The apparatus according to claim 60, wherein the information of the LTM cell switch comprises one or more of the following:
TCI state identifier information;
target configuration identifier information;
a TA value of a target cell;
CFRA resource information.

64. The apparatus according to claim 55, wherein the recording unit is specifically configured to perform one or more of the following:
recording the first information in one report;
recording the first information in different reports, and establishing an association relationship among the different reports.

65. The apparatus according to claim 64, wherein the establishing an association relationship among the different reports comprises one or more of the following:
establishing the association relationship among the different reports through parameters in the different reports;
setting indication information in a report, and establishing the association relationship among the different reports through the indication information;
establishing the association relationship among the different reports through a timestamp;
establishing the association relationship among the different reports through identifier information of the terminal.

66. The apparatus according to claim 55, wherein the apparatus further comprises:
a second receiving unit, configured to receive a request message transmitted by the network device;
wherein the first transmitting unit is specifically configured to: transmit the first information to the network device according to the request message.

67. The apparatus according to claim 66, wherein the apparatus further comprises:
a second transmitting unit, configured to transmit sixth indication information to the network device, wherein the sixth indication information is used to indicate that the terminal stores the first information.

68. A mobility failure handling apparatus, comprising:
a first receiving unit, configured to receive first information transmitted by a terminal, wherein the first information is recorded in a case that the terminal is configured with LTM configuration information and a failure occurs, and wherein the first information is LTM-related failure information.

69. The apparatus according to claim 68, wherein the failure comprises a single failure and/or consecutive failures, and the consecutive failures comprise at least two failures.

70. The apparatus according to claim 69, wherein the single failure comprises one of the following:
a failure in performing LTM;
an RLF occurring in a source cell;
a failure in performing a legacy handover.

71. The apparatus according to claim 69, wherein the consecutive failures comprise one of the following:
a failure in performing LTM, and a failure in recovery through LTM;
an RLF occurring in a source cell, and a failure in recovery through LTM;
a failure in performing a legacy handover, and a failure in recovery through LTM;
a failure in performing LTM, successful recovery through LTM, and an RLF occurring within first time after accessing a target cell;
an RLF occurring in a source cell, successful recovery through LTM, and an RLF occurring within second time after accessing a target cell;
a failure in performing a legacy handover, successful recovery through LTM, and an RLF occurring within third time after accessing a target cell.

72. The apparatus according to claim 68, wherein the first information comprises one or more of the following:
related information of a failure in performing LTM;
related information of a failure in recovery through LTM;
time-related information of occurrence of the failure;
indication information indicating whether subsequent LTM is supported.

73. The apparatus according to claim 72, wherein the related information of the failure in performing LTM comprises one or more of the following:
first indication information, used to indicate an LTM execution type;
information of LTM cell switch;
identifier information of an LTM candidate cell;
Layer 1 measurement result information of the LTM candidate cell;
Layer 1 measurement configuration information of the LTM candidate cell;
information of a TCI state activated in advance;
second indication information, used to indicate whether an execution mode of LTM is a RACH mode or a non-RACH mode;
a TA value of a target cell determined by the terminal;
CG configuration information of the target cell;
a value of an LTM timer;
time between a moment at which the terminal receives LTM configuration information and a moment at which the failure in performing LTM occurs;
time between a moment at which the failure in performing LTM occurs and a moment at which the terminal transmits the first information to the network device;
reference configuration information;
configuration information of the LTM candidate cell;
candidate cell execution configuration information.

74. The apparatus according to claim 72, wherein the related information of the failure in recovery through LTM comprises one or more of the following:
identifier information of an LTM recovery cell;
third indication information, used to indicate whether the terminal obtains a TA value of the LTM recovery cell;
a TA value of the LTM recovery cell determined by the terminal;
fourth indication information, used to indicate whether an LTM recovery procedure is a RACH procedure or a non-RACH procedure;
fifth indication information, used to indicate whether the terminal is downlink-synchronized with the LTM recovery cell;
CG configuration information of the LTM recovery cell;
reference configuration information;
configuration information of the LTM recovery cell;
identifier information of a cell in which a radio link failure occurs.

75. The apparatus according to claim 72, wherein the time-related information of occurrence of the failure comprises one or more of the following:
time between a moment at which the terminal receives LTM configuration information and a moment at which an RLF occurs;
time between a moment at which the terminal receives LTM configuration information and a moment at which a legacy handover failure occurs;
time between a moment at which the terminal receives LTM configuration information and a moment at which the terminal transmits the first information to the network device;
time between a moment at which an RLF occurs in the terminal and a moment at which the terminal transmits the first information to the network device;
time between a moment at which a legacy handover failure occurs in the terminal and a moment at which the terminal transmits the first information to the network device.

76. The apparatus according to claim 73, wherein the information of the LTM cell switch comprises one or more of the following:
TCI state identifier information;
target configuration identifier information;
a TA value of a target cell;
CFRA resource information.

77. The apparatus according to claim 68, wherein the first information is recorded in one report, and/or the first information is recorded in different reports, and the different reports have an association relationship therebetween.

78. The apparatus according to claim 77, wherein the different reports are associated through one or more of the following:
parameters in the different reports;
indication information in a report;
a timestamp;
identifier information of the terminal.

79. The apparatus according to claim 68, wherein the apparatus further comprises:
a third transmitting unit, configured to transmit a request message to the terminal.

80. The apparatus according to claim 79, wherein the apparatus further comprises:
a third receiving unit, configured to receive sixth indication information transmitted by the terminal, wherein the sixth indication information is used to indicate that the terminal stores the first information.

81. The apparatus according to claim 68, wherein the apparatus further comprises:
a processing unit, configured to perform LTM mobility optimization according to the first information; and/or transmit the first information to a first node, wherein the first information is used by the first node to perform LTM mobility optimization according to the first information.

82. A processor-readable storage medium, storing a computer program, wherein the computer program, when executed by a processor, causes the processor to implement steps of the mobility failure handling method according to any one of claims 1 to 13, or to implement steps of the mobility failure handling method according to any one of claims 14 to 27.
